(19) Europäisches Patentamt
European Patent Office
Office européen des brevets

(11) **EP 4 119 361 B1**

(12) **EUROPEAN PATENT SPECIFICATION**

(45) Date of publication and mention
of the grant of the patent:
**28.08.2024 Bulletin 2024/35**

(21) Application number: **22178844.1**

(22) Date of filing: **14.06.2022**

(51) International Patent Classification (IPC):
**B60C 11/03** *(2006.01)* **B60C 1/00** *(2006.01)*
**B60C 11/00** *(2006.01)*

(52) Cooperative Patent Classification (CPC):
**B60C 1/00; B60C 11/0302;** B60C 2011/0025;
B60C 2011/0374; B60C 2011/0381

(54) **TIRE FOR AUTOMATED TWO-WHEELED VEHICLE**

REIFEN FÜR AUTOMATISIERTE ZWEIRÄDER

PNEU POUR VÉHICULES AUTOMATISÉS À DEUX ROUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.07.2021 JP 2021116668
18.03.2022 JP 2022044160**

(43) Date of publication of application:
**18.01.2023 Bulletin 2023/03**

(73) Proprietor: **Sumitomo Rubber Industries, Ltd.
Kobe-shi, Hyogo 651-0072 (JP)**

(72) Inventor: **IKAI, Takuma
Kobe-shi, 651-0072 (JP)**

(74) Representative: **TBK
Bavariaring 4-6
80336 München (DE)**

(56) References cited:
**CN-A- 101 500 824 JP-A- 2018 070 109
JP-A- S6 094 804 JP-B2- 5 457 233**

**Description**

TECHNICAL FIELD

The present invention relates to a tire for automated two-wheeled vehicle.

BACKGROUND OF THE INVENTION

In a tire for automated two-wheeled vehicle, a center part (crown part) of a tread rubber thereof mainly comes in contact with a road surface during straight running, and a shoulder part mainly comes in contact with the road surface during turning, so that performance depending on situation is required at each part. For this reason, in a tire for automated two-wheeled vehicle, the tread rubber of the center part and the tread rubber of the shoulder part are often made of different rubber compositions having different characteristics, respectively (JP 2019-127184 A).
JP S60 94804 A relates to a tread rubber made of composite rubber A with 0.05-0.30 loss tangent at 60°C is arranged continuously from a tire tread part 11 to a side wall part 4 via the carcass side of a shoulder part 12 or discontinuously except the shoulder part 12, wherein for the shoulder part 12, the trade rubber of high gripping property made of high rubber compound B of 0.40-0.80 loss tangent at 60°C is arranged so as to polymerize the tread rubber continuing between the tread center part 11 and the side wall part 14 or to join the discontinuous part.
CN 101 500 824 A relates to a pneumatic radial tire for a two-wheeled motor vehicle, in which a difference in rigidity between a center section and shoulder sections in a tread section is reduced, wherein the tire has a carcass (1) and a belt layer (2), the tread section is constructed from a center rubber (3) placed in the lateral center region of the tire, on both sides of the tire equator, and both side rubber (4) arranged on both lateral ends of the tire, the center rubber (3) and both side rubber (4) are layered in sequence at both lateral ends of the tire, the ratio of the thickness of both side rubber (4) in the tread section increases toward both lateral ends, and both side rubber (4) has lower modulus than the center rubber section (3).
JP 2018 070109 A relates to a tire 1 in which a tread part 2 has a circular arc profile in a tire meridian cross section, wherein the tread part 2 includes a crown region Cr which grounds when direct advance running, and a pair of shoulder regions Sh which are positioned on tire axial direction both outer sides of the crown region Cr and grounds when turn running with a camber angle. A land ratio of the crown region Cr is 98% or more, and further, a land ratio of the shoulder region Sh is 85% to 93%.
JP 5 457233 B2 relates to a tire for a motorcycle having a tread part for arranging tread rubber divided into at least three parts in the tire width direction, wherein the tread rubber has center rubber arranged in the central part in the tire width direction and shoulder rubber arranged on both sides in the tire width direction of the center rubber, and the center rubber includes a rubber component and silica on which the CTAB specific surface area is 180 m$^2$/g or more and the BET specific surface area is 185 m$^2$/g or more.

SUMMARY OF THE INVENTION

However, if the characteristics of the rubber composition are changed at the center part and the shoulder part, stress is concentrated on their interface, leading to a problem that peeling becomes easy to occur. In this case, if a groove straddling over the center part and the shoulder part is provided, under a dry condition, the groove prevents stress concentration onto the interface, which is therefore expected to suppress the peeling, but on the contrary, under a wet condition, the groove becomes a starting point for fracture, leading to a problem that cracks become easy to occur.
It is an object of the present invention to provide a tire for automated two-wheeled vehicle that is less likely to cause peeling and cracking regardless of a dry or wet condition.
As a result of intensive studies, the present inventor has found that the above-described problem can be solved by a tire for automated two-wheeled vehicle comprising a tread having a crown part and a pair of shoulder parts, wherein a 70°C tan $\delta$ is adjusted to become larger at the crown part than at the shoulder part and a 0°C tan $\delta$ is adjusted to become smaller at the crown part than at the shoulder part, and wherein a tread surface is made to have a groove that straddles over a boundary between the crown part and the shoulder part and does not straddle over an equator, and conducted further studies to complete the present invention.
That is, the present invention relates to:

a tire for automated two-wheeled vehicle comprising a tread part, the tread part comprising a crown part located at a center in a tire axial direction and a pair of shoulder parts located outside the crown part,
wherein a tan $\delta$ at 70°C of a rubber composition of the crown part (70°C tan $\delta_{Cr}$) is larger than a tan $\delta$ at 70°C of a rubber composition of the shoulder part (70°C tan $\delta_{Sh}$),
wherein a tan $\delta$ at 0°C of the rubber composition of the crown part (0°C tan $\delta_{Cr}$) is smaller than a tan $\delta$ at 0°C of the rubber composition of the shoulder part (0°C tan $\delta_{Sh}$),
wherein a tread surface of the tread part comprises a groove, and
wherein the groove straddles over a boundary between the crown part and the shoulder part and does not straddle over an equator.

According to the present invention, a tire for automated two-wheeled vehicle that is less likely to cause peeling and cracking regardless of a dry or wet condition can be provided.

BRIEF DESCRIPTION OF THE DRAWINGS

FIG. 1 is an example of a cross-sectional view taken along a plane including a tire rotation axis of a tire for automated two-wheeled vehicle.
FIG. 2 is an example of a cross-sectional view taken along a plane including a tire rotation axis, showing a state where a tire for automated two-wheeled vehicle is in contact with a road surface (in a case where a crown part does not extend to outside a grounding surface).
FIG. 3 is an example of a cross-sectional view taken along a plane including a tire rotation axis, showing a state where a tire for automated two-wheeled vehicle is in contact with a road surface (in a case where a crown part extends to outside a grounding surface).
FIG. 4 is an example of a development view of a tread part of a tire for automated two-wheeled vehicle.
FIG. 5 is an example of a development view of a tread part of a tire for automated two-wheeled vehicle.
FIG. 6 is a cross-sectional view of the tire for automated two-wheeled vehicle of FIG. 1 having a tread pattern of FIG. 4 when the tire is cut along a cutting line Y on FIG. 4 passing through the center of gravity of the tire.

DETAILED DESCRIPTION

The present invention relates to a tire for automated two-wheeled vehicle comprising tread part, the tread part comprising a crown part located at a center in a tire axial direction and a pair of shoulder parts located outside the crown part, wherein a tan $\delta$ at 70°C of a rubber composition of the crown part (70°C tan $\delta_{Cr}$) is larger than a tan $\delta$ at 70°C of a rubber composition of the shoulder part (70°C tan $\delta_{Sh}$), wherein a tan $\delta$ at 0°C of the rubber composition of the crown part (0°C tan $\delta_{Cr}$) is smaller than a tan $\delta$ at 0°C of the rubber composition of the shoulder part (0°C tan $\delta_{Sh}$), wherein a tread surface of the tread part comprises a groove, and wherein the groove straddles over a boundary between the crown part and the shoulder part and does not straddle over an equator.

Although it is not intended to be bound by theory, in the present invention, the following can be considered as a mechanism by which peeling and cracking become less likely to occur regardless of a dry or wet condition.

That is, when the automated two-wheeled vehicle is made run straight under a dry condition, a temperature easily becomes higher at the crown part of the tread than at the shoulder part due to friction caused by grounding contact, but when the 70°C tan $\delta$ of the crown part is made higher than that of the shoulder part, the heat generation increases and the temperature at the crown part becomes higher. This results in a situation where the crown part easily becomes softer than the shoulder part. In the two-wheeled vehicle, a frictional force is applied from the crown part to the shoulder part during turning, but if the crown part is thus softer than the shoulder part, a crown-side interface becomes easy to follow along a shoulder-side interface, so that it is considered that peeling between the crown and the shoulder becomes less likely to occur. Furthermore, by providing the grooves, stress is generated not only at the interfaces but also at the groove parts, so that it is considered that stress concentration onto the interfaces can be prevented and interfacial peeling can be further prevented.

Besides, a certain effect of preventing peeling can be obtained by softening not only the crown part but also the shoulder part, though, in that case, rigidity of the entire tread becomes lowered, so that it is difficult to maintain stability during turning. Moreover, a certain effect of preventing peeling can be obtained even by softening the crown part regardless of a temperature, though, in that case, it is difficult to maintain stability during straight running. On the other hand, in the present invention, an effect of preventing interfacial peeling can be obtained while maintaining stability during turning or straight running under a dry condition.

On the other hand, in a case of a wet condition, friction with a road surface is reduced as compared with a case of a dry condition, so even if the crown part and the shoulder part have the same degree of hardness, interfacial peeling is less likely to occur, but there is a concern that presence of the grooves may become a starting point for fracture. Here, by making the 0°C tan $\delta$ of the shoulder part to be higher than that of the crown part to increase heat generation, the shoulder part is set to have a comparable degree of temperature to that of the crown part that has many grounding opportunities, making a temperature difference between the interface not to be large. As a result, during turning, input from the road surface becomes easy to be transmitted to the crown part without delay, so that it is considered that the fracture of the crown part is suppressed. Furthermore, since the grooves do not reach the equator, no part sandwiched by the grooves is generated in a circumferential direction on the equator, so that it is considered that the fracture is further suppressed. In particular, it is considered that the fracture is suppressed even when a symmetrical pattern is used.

A largest groove depth D (mm) of the groove preferably satisfies the following inequality (1).

$$\text{Inequality (1): } D \times 70°C \tan \delta_{Cr} > 1.20$$

When the $70°C \tan \delta_{Cr}$ becomes small, there is a tendency that the effect of preventing stress concentration due to a groove on a dry road surface has to be increased. Therefore, when the 70°C tan 5cr becomes small, it is preferable to increase the groove depth.

A largest groove width W (mm) of the groove preferably satisfies the following inequality (2).

$$\text{Inequality (2): } W \times 70°C \tan \delta_{Cr} > 0.80$$

When the $70°C \tan \delta_{Cr}$ becomes small, there is a tendency that the effect of preventing stress concentration due to the groove on the dry road surface has to be increased. Therefore, when the 70°C tan 5cr becomes small, it is preferable to widen the groove width.

A largest groove circumferential length component Lc (mm) of preferably satisfies the following inequality (3).

$$\text{Inequality (3): } LC \times (70°C \tan \delta_{Cr} - 70°C \tan \delta_{Sh}) > 0.05$$

When a difference between the 70°C tan 5cr and the $70°C \tan \delta_{Sh}$ becomes small, there is a tendency that the effect of preventing stress concentration due to the groove on the dry road surface has to be increased. Therefore, when the difference between the 70°C tan 5cr and the $70°C \tan \delta_{Sh}$ becomes small, it is preferable to lengthen the circumferential length component of the groove.

A smallest groove bottom thickness H (mm) of the groove preferably satisfies the following inequality (4).

$$\text{Inequality (4): } H/0°C \tan \delta_{Cr} > 1.3$$

When the $0°C \tan \delta_{Cr}$ becomes large, there is a tendency that it becomes difficult to make a temperature difference, between both sides of the interface, less likely to occur on a wet road surface, but if the groove bottom thickness (thickness of the rubber on the tread part at the groove bottom) is large, the tire can move flexibly and relax stress, so that it becomes less likely to be fractured. Therefore, when the 0°C tan 5cr becomes large, it is preferable to increase the groove bottom thickness.

A largest groove cross-sectional area S ($mm^2$) of the groove preferably satisfies the following inequality (5).

$$\text{Inequality (5): } S/(0°C \tan \delta_{Sh} - 0°C \tan \delta_{Cr}) < 150$$

When the difference between the $0°C \tan \delta_{Sh}$ and the 0°C tan 5cr becomes small, there is a tendency that it becomes difficult to make the temperature difference, between both sides of the interface, less likely to occur on the wet road surface, but the smaller the groove cross-sectional area is, the higher the rigidity becomes and the less likely the tire becomes fractured. Therefore, when the difference between the $0°C \tan \delta_{Sh}$ and the 0°C tan 5cr becomes small, it is preferable that the groove cross-sectional area is small.

A tan $\delta$ peak temperature of the rubber composition of the crown part ($T_{Cr}$) is preferably lower than a tan $\delta$ peak temperature of the rubber composition of the shoulder part ($T_{Sh}$). This is because elastic deformation becomes easy to occur when the rubber gets in contact with a road surface, so that the rubber becomes easy to bite into the road surface, and improvement in wet grip performance can be expected.

A hardness of the rubber composition of the crown part is preferably higher than a hardness of the rubber composition of the shoulder part. This is because improvement in grip performance at the shoulder part during turning can be expected.

A stress at 300% elongation of the rubber composition of the crown part ($M300_{Cr}$) is preferably higher than a stress at 300% elongation of the rubber composition of the shoulder part ($M300_{Sh}$). This is because achieving both high-speed durability during straight running and grip performance during high-speed turning can be expected.

<Definition>

In the present specification, unless otherwise specified, a dimension, etc. of each part of the tire shall be measured in a standardized state where the tire is rim-assembled on a standardized rim and filled with a standardized internal pressure with no load applied.

The "standardized rim" is a rim defined for each tire, in a standard system including a standard on which the tire is based, by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). In addition, in a case of tires that are not defined by the standard, the "standardized rim" refers to a rim that can be assembled and maintain an internal pressure, that is, one that has the smallest rim diameter and secondly has the narrowest rim width, among rims that do not cause air leakage between the rim and the tire.

A "standardized internal pressure" is an air pressure defined for each tire, in a standard system including a standard on which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO.

A "standardized load" means a load defined in the standard system including the standard on which the tire is based. A "MAXIMUM LOAD CAPACITY" in the JATMA standard, a "MAXIMUM VALUE" published in "TIRE LOAD LIMITS AT VARIOUS COLD INFLATION PRESSURES" in the TRA standard, and a "LOAD CAPACITY" in the ETRTO standard are standardized loads.

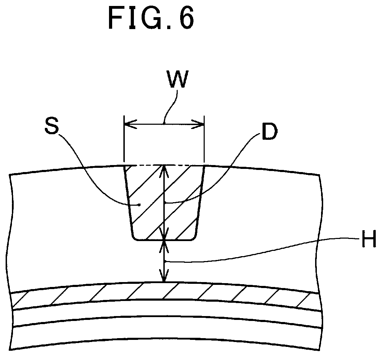

The "groove depth D" is a groove depth (mm) of a groove having the largest groove depth among grooves provided on a tread surface. The groove depth means the largest value of a depth in the groove. The groove depth D is, for example, as shown in FIG. 6.

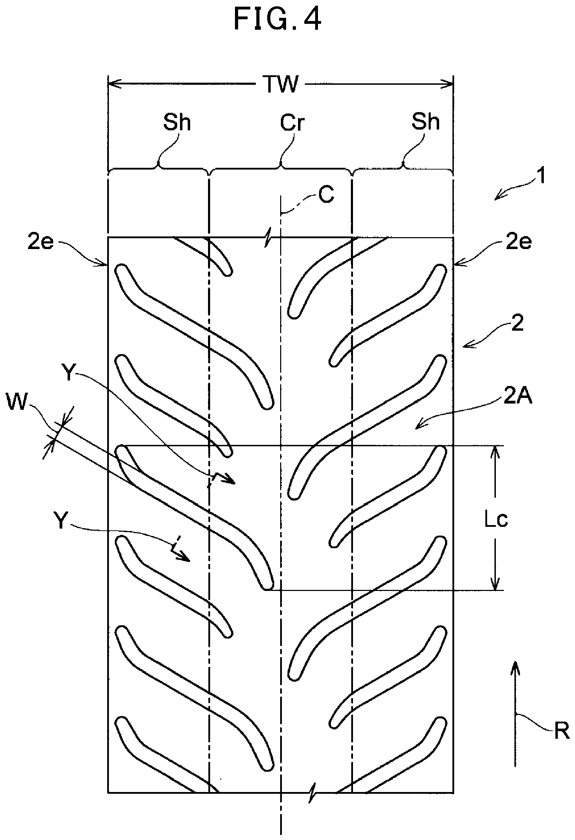

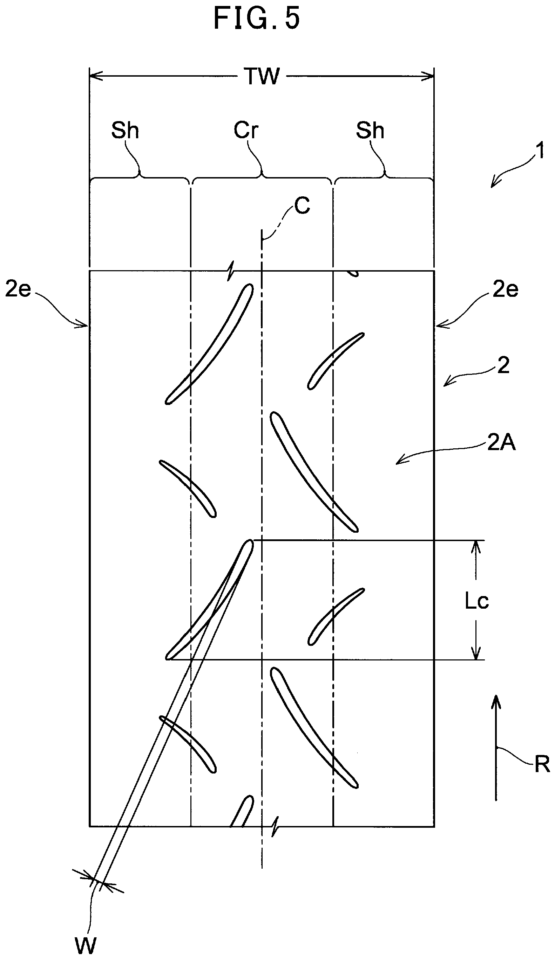

The "groove width W" is a groove width (mm) on a tread surface of a groove having the largest groove width on the tread surface among grooves provided on the tread surface. The groove width means the largest value of a groove width in a direction perpendicular to a longitudinal direction of the groove. The groove width W is, for example, as shown in FIGS. 4 and 5.

The "groove circumferential length component Lc (mm)" is a circumferential length component (mm) of a groove having the largest circumferential length component among grooves provided on a tread surface. The groove circumferential length component Lc is, for example, as shown in FIGS. 4 and 5.

The "groove bottom thickness H" is a thickness (mm) of a tread rubber at a groove bottom of a groove having the smallest groove bottom thickness among grooves provided on a tread surface. The groove bottom thickness means the smallest value of a thickness of a groove bottom in the groove. The groove bottom thickness H is, for example, as shown in FIG. 6.

The "groove cross-sectional area S" is a groove cross-sectional area ($mm^2$) of a groove having the largest groove cross-sectional area among grooves provided in a tread. The groove cross-sectional area means a cross-sectional area of a groove in a cross-sectional view cut in a cutting plane passing through the center of gravity of a tire in a direction perpendicular to a longitudinal direction of the groove. The groove cross-sectional area S is, for example, as shown in FIG. 6.

The "crown part" is a part of a tread part, which is located in a center of the tread part, and which reaches an outer side in a tire axial direction with respect to a position within $\pm$ 5% of a tread width around the tire equator and does not reach a tread edge. However, a part of an electrically conductive rubber member when provided is excluded.

The "shoulder part" is a part of the tread part, which is located on the outer side of the crown part in the tire axial direction and reaches the tread edge.

The "tread width" is a distance from one tread edge to the other tread edge, which is an outer end in the tire axial direction, on the tread surface which is a part that comes into contact with a road surface, of the tread part.

The "electrically conductive rubber member" is a member embedded in the tread part, a part of which is exposed on a tire grounding surface, in order to effectively release static electricity generated during running of a tire to the grounding surface. It includes a member called as a base pen.

<Measuring method>

The "tan $\delta$ peak temperature of the rubber composition" is determined as a temperature corresponding to a largest tan $\delta$ value (tan $\delta$ peak temperature) in a temperature distribution curve of tan $\delta$ obtained by measurement, under a condition of a frequency of 10 Hz, an initial strain of 10%, a dynamic strain of $\pm$ 0.5%, and a temperature rising rate at 2°C/min, using EPLEXOR series manufactured by gabo Systemtechnik GmbH. A sample for measurement is a vulcanized rubber composition with 20 mm in length × 4 mm in width × 1 mm in thickness. When it is cut out from a tread part of a tire for preparation, a length direction becomes a tire circumferential direction.

The "0°C tan $\delta$" is a loss tangent measured under a condition of a temperature at 0°C, a frequency of 10 Hz, an initial strain of 10%, a dynamic strain of 2.5%, and an extension mode, using EPLEXOR series manufactured by gabo Systemtechnik GmbH. A sample for loss tangent measurement is a vulcanized rubber composition with 20 mm in length × 4 mm in width × 1 mm in thickness. When it is cut out from a tread part of a tire for preparation, a length direction becomes a tire circumferential direction.

The "70°C tan $\delta$" is a loss tangent measured under a condition of a temperature at 70°C, a frequency of 10 Hz, an initial strain of 10%, a dynamic strain of 1%, and an extension mode, using EPLEXOR series manufactured by gabo Systemtechnik GmbH. The sample for loss tangent measurement is prepared in the similar manner as in the case of 0°C tan $\delta$.

For "M300", a dumbbell-shaped No. 7 specimen with a thickness of 1 mm, which is cut out from inside of a rubber layer of a tread part of each test tire so that a tire circumferential direction becomes a tensile direction, is prepared, and according to JIS K 6251 "Rubber, vulcanized or thermoplastics-Determination of tensile stress-strain properties", a tensile test is performed under a condition of a tensile speed of 3.3 mm/sec in an atmosphere of 23°C to measure a stress at 300% elongation (M300) (MPa).

For the "hardness of the rubber composition", a tread part is cut out from the tread part forming a grounding surface of a test tire so that a tire radial direction becomes a thickness direction to produce a sample for measuring hardness, and a type A durometer is pressed against the sample from the grounding surface side at 23°C to measure a hardness in accordance with JIS K 6253.

A "styrene content" is calculated by $^1$H-NMR measurement. For example, it is applied for a styrene-containing rubber such as a SBR.

A "vinyl bond content (1,2-bond butadiene unit amount)" is measured by infrared absorption spectrometry. For example, it is applied for a SBR, a BR, and the like.

A "glass transition temperature of a rubber component" is a value measured under a condition of a temperature rising rate of 10°C/min, using a differential scanning calorimeter (Q200) manufactured by TA Instruments Japan Inc., according to JIS K 7121. For example, it is applied for a SBR, a BR, and the like.

A "cis 1,4 bond content (cis content)" is a value calculated by infrared absorption spectrometry. For example, it is applied for a BR and the like.

A "weight-average molecular weight" can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation). For example, it is applied for a SBR, a BR, resin, a liquid polymer, and the like.

A "$N_2SA$ of carbon black" is measured according to JIS K 6217-2: "Carbon black for rubber industry-Fundamental characteristics-Part 2: Determination of specific surface area-Nitrogen adsorption methods-Single-point procedures".

A "DBP of carbon black " is measured in accordance with JIS K 6217-4: 2001.

A "$N_2SA$ of silica" is measured by the BET method according to ASTM D3037-93.

A "softening point" is a temperature at which a sphere drops when the softening point specified in JIS K 6220-1: 2001 is measured with a ring and ball softening point measuring device. For example, it is applied for resin and the like.

A "SP value" means Solubility Parameter calculated by the Hoy method based on a structure of a compound. The Hoy method is a calculation method described in K. L. Hoy "Table of Solubility Parameters", Solvent and Coatings Materials Research and Development Department, Union Carbites Corp. (1985). The SP value is applied for, for example, resin and the like.

<Tire for automated two-wheeled vehicle>

The tire for automated two-wheeled vehicle of the present invention will be described below.

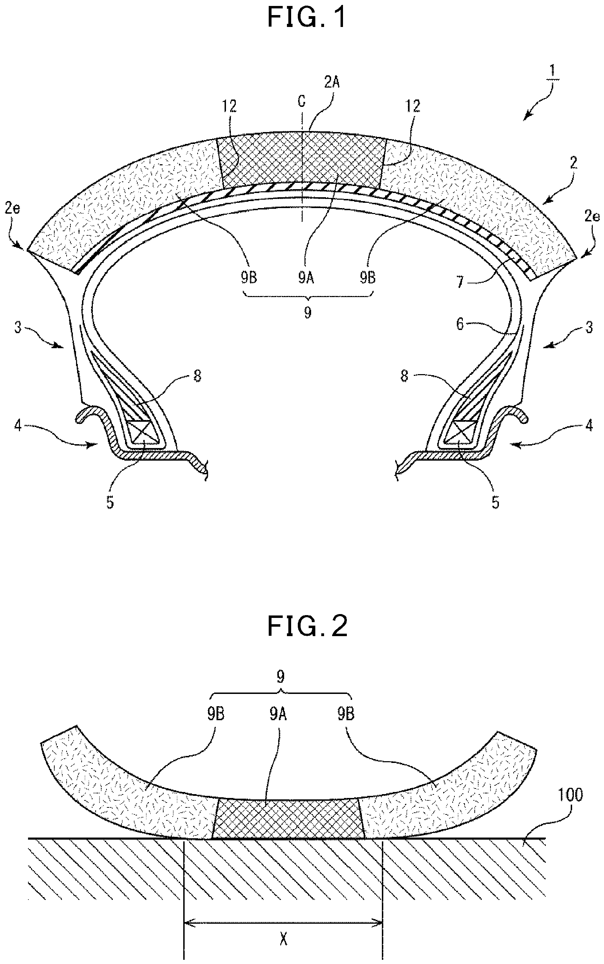

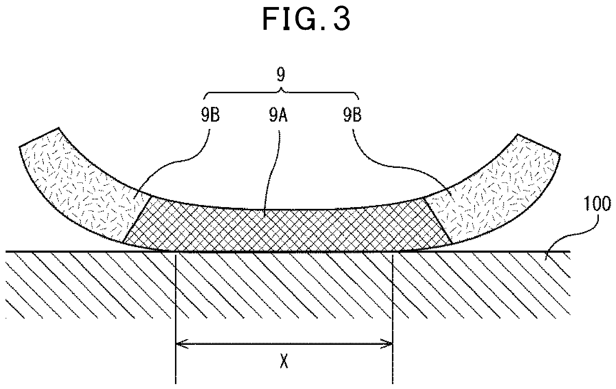

Hereinafter, the tire will be described as one embodiment of the present invention as appropriate with reference to the drawings. FIG. 1 is an example of a cross-sectional view taken along a plane including a tire rotation axis (also referred to as a "tire axis") of a tire for automated two-wheeled vehicle (However, indication of a groove provided on a tread surface is omitted. The same applies to FIGS. 2 and 3.). The tire for automated two-wheeled vehicle 1 comprises a carcass 6 extending from a tread part 2 through a sidewall part 3 to a bead core 5 of a bead part 4, and a belt layer 7 arranged on an outer side of the carcass 6 in a tire radial direction and on an inner side of the tread part 2. In the above-described cross section, a tread surface 2A of the tread part 2 that comes into contact with a road surface is convex and extends in an arc shape with bended outward in the tire radial direction. Moreover, an outer end of the tread surface 2A in the tire axial direction is a tread edge 2e.

[Tread part]

In the tire for automated two-wheeled vehicle, the tread part comprises a crown part located at a center in a tire axial direction and a pair of shoulder parts located outside the crown part. Moreover, each of the pair of shoulder parts may be further divided. Furthermore, the crown part may be further divided.

In the present invention, the crown part and the shoulder part satisfy a predetermined relationship. When at least one of the crown part and the shoulder part is divided, at least one set of two parts adjacent in a region on an outer side in a tire axial direction with respect to a position within ± 5% of a tread width around a tire equator, respectively, may satisfy a predetermined relationship to be satisfied by the crown part and the shoulder part of the present invention.

That is, at least one set of two parts adjacent in a region on the outer side in the tire axial direction with respect to a position within + 5% of the tread width around the tire equator may satisfy the predetermined relationship to be satisfied by the crown part and the shoulder part of the present invention, and on the opposite side, at least one set of two parts adjacent in a region on the outer side of the tire axial direction with respect to a position within - 5% of the tread width around the tire equator may satisfy the predetermined relationship to be satisfied by the crown part and the shoulder part of the present invention. In this case, of these two adjacent parts, the part on the inner side in the tire axial direction is a crown part of the present invention, and the part on the outer side in the tire axial direction is a shoulder part of the present invention.

In the present invention, when at least one of the crown part and the shoulder part is divided, it is preferable that all the crown parts and all the shoulder parts satisfy the predetermined relationship to be satisfied by the crown part of the present invention and the shoulder part of the present invention.

On the tread part 2, a tread rubber 9 is arranged on an outer side in a radial direction of the belt layer 7. In the present embodiment, the tread rubber 9 covers a space from an outer surface of the belt layer 7 to the tread surface 2A. The tread rubber 9 is formed of a crown part 9A with a tire equator C centered thereon and a pair of shoulder parts 9B adjacent to the crown part 9A and extending to the tread edge 2e. That is, two types of members, the crown part 9A and the shoulder parts 9B, are arranged side by side from a vicinity of the tire equator C toward both sides in the tire axial direction. Besides, in FIG. 1, the crown part 9A and the shoulder parts 9B are separated by a normal line 12 made to stand on the tread surface 2A, but a format of the separation is not limited, such as, for example, one separated by a boundary line outwardly or inwardly inclining in the tire axial direction from the tread surface 2A toward the belt layer 7.

As shown in FIG. 2, a position of the separation (a boundary line) between the crown part 9A and the shoulder parts 9B may be inside of a width X of a grounding surface (a part where the tread rubber 9 comes into contact with a road surface 100 with a standardized internal pressure being applied and a standardized load being applied) or outside thereof (see FIG. 3). The state shown in FIG. 2 is referred to as a state being "inside the grounding surface", and the state shown in FIG. 3 is referred to as a state being "outside the grounding surface". From the viewpoint of preventing a stepped abrasion caused by a difference in abrasion resistance of a tread compounding, the position of the separation is preferably outside the width X.

[Rubber composition of tread part]

(70°C tan $\delta$)

In the present invention, the tan $\delta$ at 70°C of a rubber composition of the crown part (70°C tan $\delta_{Cr}$) is larger than the tan $\delta$ at 70°C of a rubber composition of the shoulder part (70°C tan $\delta_{Sh}$). In the present invention, the 70°C tan $\delta$ is an index relating to heat generation of a rubber composition when running on a dry road surface. Since the 70°C tan $\delta_{Cr}$ is larger than the 70°C tan $\delta_{Sh}$, the temperature of the crown part that receives a large amount of friction from the road surface during straight running becomes easy to increase also in terms of heat generation, resulting in a situation where the crown part easily becomes softer than the shoulder part. In the present invention, the difference between the 70°C tan $\delta_{Cr}$ and the 70°C tan $\delta_{Sh}$ is preferably 0.01 or more, more preferably 0.02 or more, further preferably 0.03 or more. On the other hand, an upper limit of the difference is not particularly specified, but it is usually 0.10 or less, 0.09 or less, 0.08 or less, or 0.07 or less.

The 70°C tan $\delta_{Cr}$ is preferably 0.19 or more, more preferably 0.20 or more, further preferably 0.21 or more, further preferably 0.22 or more, further preferably 0.23 or more, further preferably 0.24 or more, further preferably 0.25 or more. This makes it easier to obtain effects of the present invention. On the other hand, the 70°C tan $\delta_{Sh}$ is preferably 0.22 or less, more preferably 0.21 or less, further preferably 0.20 or less, further preferably 0.19 or less, further preferably 0.18 or less. This makes it easier to obtain the effects of the present invention.

The 70°C tan $\delta$ can be adjusted depending on types and amounts of components compounded in the rubber composition, and it tends to be increased, for example, by increasing an amount of a filler (carbon black, silica, etc.) or oil and tends to be decreased by decreasing the amount of the filler (carbon black, silica, etc.) and oil. The 70°C tan $\delta$ is measured by the above-described method.

(0°C tan $\delta$)

In the present invention, the tan $\delta$ at 0°C of the rubber composition of the crown part (0°C tan $\delta_{Cr}$) is smaller than the tan $\delta$ at 0°C of the rubber composition of the shoulder part (0°C tan $\delta_{Sh}$). In the present invention, the 0°C tan $\delta$ is an index relating to heat generation of the rubber composition when running on a wet road surface. When the 0°C tan $\delta_{Cr}$ is smaller than the 0°C tan $\delta_{Sh}$, heat generation of the shoulder part becomes higher than that of the crown part, and the temperature of the shoulder part becomes an comparable degree as that of the crown part that has many grounding opportunities, which makes a temperature difference between interface difficult to occurs. In the present invention, the difference between the 0°C tan $\delta_{Sh}$ and the 0°C tan $\delta_{Cr}$ is preferably 0.10 or more, more preferably 0.18 or more, further preferably 0.20 or more. On the other hand, an upper limit of the difference is not particularly specified, but it is usually 0.50 or less, 0.40 or less, 0.38 or less, or 0.37 or less.

The 0°C tan $\delta_{Cr}$ is preferably 0.88 or less, more preferably 0.80 or less, further preferably 0.70 or less, further preferably 0.65 or less, further preferably 0.60 or less, further preferably 0.58 or less. This makes it easier to obtain the effects of the present invention. On the other hand, the 0°C tan $\delta_{Sh}$ is preferably 0.75 or more, more preferably 0.78 or more, further preferably 0.80 or more, further preferably 0.81 or more. This makes it easier to obtain the effects of the present invention.

The 0°C tan $\delta$ can be adjusted depending on types and amounts of components compounded in the rubber composition, and, for example, it tends to be increased by increasing an amount of a filler (carbon black, silica, etc.) or oil and tends to be decreased by decreasing the amount of the filler (carbon black, silica, etc.) and oil. The 0°C tan $\delta$ is measured by the above-described method.

(Tan $\delta$ peak temperature)

In the present invention, the tan $\delta$ peak temperature of the rubber composition of the crown part ($T_{Cr}$) is preferably lower than a tan $\delta$ peak temperature of the rubber composition of the shoulder part ($T_{Sh}$), from the viewpoint of wet grip performance. A difference between the $T_{Sh}$ and the $T_{Cr}$ is preferably 1°C or higher. On the other hand, the difference is preferably 10°C or lower, preferably 7°C or lower.

The $T_{Cr}$ is preferably -20°C or higher, more preferably -15°C or higher, further preferably -12°C or higher. On the other hand, the $T_{Cr}$ is preferably 5°C or lower, more preferably 0°C or lower. Moreover, the $T_{Sh}$ is preferably -15°C or higher, more preferably -10°C or higher, further preferably - 5°C or higher. On the other hand, the $T_{Sh}$ is preferably 10°C or lower, more preferably 5°C or lower, further preferably 3°C or lower.

The tan $\delta$ peak temperature of the rubber composition can be adjusted depending on types and amounts of components compounded in the rubber composition, and, for example, it tends to be increased by increasing an amount of a filler or decreasing an amount of a softening agent and tends to be decreased by decreasing the amount of the filler or increasing the amount of the softening agent. The tan $\delta$ peak temperature is measured by the above-described method.

(Hardness)

In the present invention, the hardness of the rubber composition of the crown part is preferably higher than the hardness of the rubber composition of the shoulder part, from the viewpoint of grip performance during turning. A difference between the hardness of the rubber composition of the crown part and the hardness of the rubber composition of the shoulder part is preferably 3 or more, preferably 5 or more. An upper limit of the difference is not particularly limited, but is usually 10 or less.

The hardness of the rubber composition can be adjusted depending on types and amounts of components compounded in the rubber composition, and, for example, it tends to be decreased by increasing an amount of a softening agent, tends to be increased by decreasing the amount of the softening agent, tends to be increased by increasing an amount of a filler, tends to be decreased by decreasing the amount of the filler, tends to be decreased by decreasing an amount of sulfur or vulcanization accelerator, and tends to be increased by increasing the amount of sulfur or vulcanization accelerator. The hardness is measured by the above-described method.

(M300)

In the present invention, the stress at 300% elongation of the rubber composition of the crown part ($M300_{Cr}$) is preferably higher than the stress at 300% elongation of the rubber composition of the shoulder part ($M300_{Sh}$), from the viewpoint of achieving both high-speed durability during straight running and grip performance during high speed turning. The $M300_{Cr}$ is preferably 110% or more, further preferably 120% or more, with respect to the $M300_{Sh}$. The $M300_{Cr}$ is usually 150% or less, 140% or less, or 130% or less of the $M300_{Sh}$.

The M300 of the rubber composition can be adjusted depending on types and amounts of components compounded in the rubber composition, and it tends to be increased by increasing an amount of a filler or decreasing an amount of a softening agent and tends to be decreased by decreasing the amount of the filler or increasing the amount of the softening agent. The M300 is measured by the above-described method.

[Groove provided on tread surface]

The tread surface of the tread part comprises a groove. The groove straddles over a boundary between the crown part and the shoulder part and does not straddle over an equator. Besides, when the shoulder part is further divided, it is preferable that the groove also straddles over the divided boundary.

The groove of the present invention straddles over the boundary between the crown part and the shoulder part. By providing the groove, in the tread of the present invention, stress is generated not only at the interface but also at the groove part, so that it is considered that stress concentration onto the interface can be prevented and interfacial peeling can be further prevented. Here, "the groove straddles over the boundary" aims not to be limited as long as the groove straddles over the boundary, but the groove is intended to prevent stress concentration onto the interface, and therefore it is desirable that, on top of straddling over the boundary, it extends on both sides of the boundary. This is because stress can be generated even in parts other than the boundary, which is desirable from the viewpoint of preventing interfacial peeling.

The groove of the present invention does not straddle over the equator. When it does not straddle over the equator, no part that is sandwiched by the grooves in the circumferential direction on the equator is generated, so that a circumferential rigidity near the tire equator can be enhanced while providing the groove, which in turn improves high-speed stability.

FIG. 4 is an example of a development view of the tread part of the tire for automated two-wheeled vehicle of the present invention. FIG. 4 is provided with grooves that straddle over a boundary between a crown part and a shoulder part of the tread part and do not straddle over an equator. Here, R in the figure represents a tire rotation direction. In FIG. 4, the groove consists of a longer main groove and a shorter sub groove. Moreover, the main groove and the sub groove are provided alternately in a tire circumferential direction and provided so as to have a symmetrical pattern with respect to a tire equator. FIG. 5 is another example of a development view of the tread part of the tire for automated two-wheeled vehicle of the present invention. FIG. 5 is provided with grooves that straddle over a boundary between a crown part and a shoulder part of the tread part and do not straddle over an equator. Here, R in the figure represents a tire rotation direction. In FIG. 5, the grooves consist of a longer main groove and a shorter sub groove. Moreover, the main groove and the sub groove are provided alternately in a tire circumferential direction and provided so as to have a symmetrical pattern with respect to a tire equator.

In the present invention, a groove area ratio (a ratio of a groove area to a total area of the tread part) is not particularly limited as long as it is usually adopted in this field, but, for example, it is preferably 5% or more, more preferably 10% or more, more preferably 15% or more, and it is preferably 40% or less, more preferably 35% or less, further preferably 30% or less.

Hereinafter, the groove depth D, the groove width W, the groove circumferential length component Lc, the groove bottom thickness H, and the groove cross-sectional area S will be described. They are also shown in FIGS. 4, 5 and 6. In addition, FIG. 6 is a cross-sectional view of the tire for automated two-wheeled vehicle of FIG. 1 having a tread pattern of FIG. 4 when the tire is cut along a cutting line Y on FIG. 4 passing through the center of gravity of the tire.

(Groove depth D)

$$\text{inequality (1): } D \times 70°C \tan \delta_{Cr} > 1.20,$$

a value on the right side is preferably 1.30, more preferably 1.40, further preferably 1.50. An upper limit of the value of $D \times 70°C \tan 5cr$ is not particularly limited, but is usually less than 3.00, preferably less than 2.50, more preferably less than 2.00.

The groove depth D is preferably 4.0 mm or more, more preferably 4.5 mm or more, further preferably 4.8 mm or more. On the other hand, the groove depth D is preferably 6.5 mm or less, more preferably 6.0 mm or less.

(Groove width W)

$$\text{inequality (2): } W \times 70°C \tan \delta_{Cr} > 0.80,$$

a value on the right side is preferably 0.90, more preferably 1.00, further preferably 1.10. An upper limit of the value of $W \times 70°C \tan 5cr$ is not particularly limited, but is usually less than 2.50, preferably less than 2.00, more preferably less than 1.50.

The groove width W is preferably 3.0 mm or more, more preferably 3.3 mm or more, further preferably 3.5 mm or more. On the other hand, the groove width W is preferably 6.0 mm or less, more preferably 5.5 mm or less, further preferably 5.0 mm or less.

(Groove circumferential length component Lc)

In

$$\text{inequality (3): } LC \times (70°C \tan \delta_{Cr} - 70°C \tan \delta_{Sh}) > 0.05,$$

a value on the right side is preferably 0.06, more preferably 0.07, further preferably 0.08. An upper limit of the value of $Lc \times (70°C \tan 5cr - 70°C \tan \delta_{Sh})$ is not particularly limited, but is usually less than 4.00, preferably less than 3.50, more preferably 3.00 or less.

The circumferential length component Lc is preferably 30.0 mm or more, more preferably 35.0 mm or more. On the other hand, the circumferential length component Lc is preferably 50.0 mm or less, more preferably 45.0 mm or less, further preferably 40.0 mm or less.

(Groove bottom thickness H)

In

$$\text{inequality (4): } H/0°C \tan \delta_{Cr} > 1.3,$$

a value on the right side is preferably 1.4, more preferably 1.5, further preferably 1.6. An upper limit of the value of $H/0°C \tan 5cr$ is not particularly limited, but is usually less than 6.0, preferably less than 5.0, more preferably less than 4.0.

The groove bottom thickness H is preferably 1.5 mm or more, more preferably 2.0 mm or more. On the other hand, the groove bottom thickness H is preferably 3.0 mm or less, more preferably 2.5 mm or less.

(Groove cross-sectional area S)

In

$$\text{inequality (5): } S/(0°C \tan \delta_{Sh} - 0°C \tan \delta_{Cr}) < 150,$$

a value on the right side is preferably 140, more preferably 130, further preferably 120. A lower limit of the value of $S/(0°C \tan \delta_{Sh} - 0°C \tan 5cr)$ is not particularly limited, but is usually less than 200, preferably less than 180, more preferably less than 160.

The groove cross-sectional area S is preferably 14.0 mm$^2$ or more, more preferably 15.0 mm$^2$ or more, further preferably 16.0 mm$^2$ or more. On the other hand, the groove cross-sectional area S is preferably 35.0 mm$^2$ or less, more preferably 29.0 mm$^2$ or less, further preferably 26.0 mm$^2$ or less.

<Components forming rubber composition>

Components forming the rubber composition according to the present invention will be described below. Here, the rubber composition according to the present invention includes both a rubber composition forming a crown part of a tread part and a rubber composition forming a shoulder part of the tread part.

[Rubber component]

In the present invention, the rubber component preferably comprises a diene-based rubber. In a preferred aspect of the present invention, the rubber component preferably consists of a diene-based rubber.

(Diene-based rubber)

Examples of the diene-based rubber include a styrene-butadiene rubber (SBR), a butadiene rubber (BR), and the like. The diene-based rubber preferably comprises a SBR and a BR, and may consist of a SBR and a BR.

«SBR»

The SBR is not particularly limited, and for example, those common in the tire industry such as an emulsion polymerization SBR (E-SBR) and a solution polymerization SBR (S-SBR) can be used. The SBR can be used alone, or two or more thereof can be used in combination.
Moreover, as the SBR, a non-modified SBR can be used, or a modified SBR can also be used. As the modified SBR, any one commonly used in the tire industry can be used, examples of which include those with a functional group that interacts with a filler such as silica introduced. Examples of such SBR include, for example, a terminal-modified SBR in which at least one end of the SBR is modified with a compound (modifying agent) having the following functional group, a main chain-modified SBR having the following functional group at the main chain, a main chain terminal-modified SBR having the following functional groups at the main chain and the terminal (for example, a main chain terminal-modified SBR having the following functional group at the main chain and in which at least one end of the SBR is modified with a compound (modifying agent) having the following functional group), a terminal-modified SBR, in which a hydroxyl group or an epoxy group is introduced, modified (coupled) with a polyfunctional compound having two or more epoxy groups in a molecule, and the like.
Examples of the above-described functional group include, for example, an amino group (preferably an amino group in which a hydrogen atom of the amino group is substituted with an alkyl group having 1 to 6 carbon atoms), an amide group, a silyl group, an alkoxysilyl group (preferably an alkoxysilyl group having 1 to 6 carbon atoms), an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, and the like. Besides, these functional groups may have a substituent. Examples of the substituent include, for example, those having a functional group such as an amino group, an amide group, an alkoxysilyl group, a carboxyl group, and a hydroxyl group introduced therein.
Furthermore, examples of the modified SBR include those obtained by further hydrogenating, epoxidizing, or tin-modifying the above-described non-modified SBR or modified SBR, and the like. Among them, a SBR obtained by further hydrogenating the above-described modified SBR (a modified hydrogenated SBR) is preferable. The hydrogenated SBR is improved in motility of a molecular chain by decreasing double bonds and increasing single bonds and is preferable from the viewpoint of the effects of the present invention because it tends to improve an entanglement effect between polymers and enhance a reinforcing property.
As the SBR, an oil-extended SBR can be used, or a non-oil-extended SBR can be used. An extending oil amount of the SBR, i.e., a content of an extending oil contained in the SBR when used is preferably 10 to 50 parts by mass based on 100 parts by mass of a rubber solid content of the SBR.
As the SBRs, for example, SBRs manufactured and sold by Sumitomo Chemical Co., Ltd., JSR Corporation, Asahi Kasei Corporation, Zeon Corporation, etc. can be used.
A styrene content of the SBR is preferably 10% by mass or more, more preferably 20% by mass or more, further preferably 30% by mass or more, because the effects of the present invention can be more appropriately obtained. Moreover, the styrene content is preferably 60% by mass or less, more preferably 55% by mass or less, further preferably 50% by mass or less. Besides, the styrene content is calculated by the above-described measuring method.
A vinyl bond amount of the SBR is preferably 10 mol% or more, more preferably 20 mol% or more, further preferably 30 mol% or more, because the effects of the present invention can be more appropriately obtained. Moreover, the vinyl bond amount is preferably 80 mol% or less, more preferably 70 mol% or less, further preferably 60 mol% or less, further preferably 50 mol% or less. Besides, the vinyl bond amount (1,2-bond butadiene unit amount) is measured by the above-described method.
A glass transition temperature (Tg) of the SBR is preferably -90°C or higher, more preferably -50°C or higher, further preferably -40°C or higher, because the effects of the present invention can be more appropriately obtained. Moreover, the Tg is preferably 0°C or lower, more preferably -10°C or lower, further preferably -15°C or lower, further preferably -20°C or lower, further preferably -25°C or lower. Besides, the glass transition temperature is measured by the above-described method.

A weight-average molecular weight (Mw) of the SBR is preferably 200,000 or more, more preferably 300,000 or more, because the effects of the present invention can be more appropriately obtained. Moreover, the Mw is preferably 2,000,000 or less, more preferably 1,500,000 million or less, further preferably 1,000,000 or less. Besides, the weight-average molecular weight (Mw) can be calculated by the above-described method.

A content of the SBR in 100% by mass of the rubber component is preferably 50% by mass or more, more preferably 55% by mass or more, further preferably 60% by mass or more. Moreover, the SBR may be 100% by mass. The content of SBR is, in a case of an oil-extended SBR, a content of the SBR itself excluding an extending oil.

«BR»

A BR is not particularly limited, and those common in the tire industry can be used such as, for example, a BR having a cis-1,4 bond content (cis content) of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). The BR can be used alone, or two or more thereof can be used in combination. Among them, a high cis BR is preferable.

Examples of the high cis BR include, for example, those manufactured by Zeon Corporation, those manufactured by Ube Industries, Ltd., those manufactured by JSR Corporation, and the like. A cis content of the high cis BR is preferably 95% or more, more preferably 96% or more, further preferably 97% or more, further preferably 98% or more. As a rare-earth-based BR, those which are synthesized using a rare-earth element-based catalyst, and have a vinyl bond content (1,2-bond butadiene unit amount) of preferably 1.8 mol% or less, more preferably 1.0 mol% or less, further preferably 0.8% mol or less, and a cis content (cis-1,4 bond content) of preferably 95 mol% or more, more preferably 96 mol% or more, more preferably 97 mol% or more, can be used. As the rare-earth-based BR, for example, those manufactured by LANXESS and the like can be used. Besides, the cis 1,4 bond content and the vinyl bond amount are measured by the above-described method.

Examples of the SPB-containing BR include those in which 1,2-syndiotactic polybutadiene crystal is chemically bonded with BR and dispersed, but not those in which the crystal is simply dispersed in the BR. As such SPB-containing BR, those manufactured by Ube Industries, Ltd. and the like can be used.

Examples of the modified BR include BRs that have been subjected to the similar modification as that described in the above-described SBR. Moreover, examples of the modified BRs include those obtained by adding a tin compound after polymerizing 1,3-butadiene by a lithium initiator (a tin-modified BR), a butadiene rubber having a condensed alkoxysilane compound at its active terminal (a modified BR for silica), and the like. As such modified BR, for example, those manufactured by ZS Elastomer Co., Ltd., and the like can be used.

A glass transition temperature (Tg) of the BR is preferably -130°C or higher, more preferably -120°C or higher, further preferably -110°C or higher, because the effects of the present invention can be more appropriately obtained. Moreover, the Tg is preferably 0°C or lower, more preferably -10°C or lower, further preferably -60°C or lower, further preferably -70°C or lower, further preferably -80°C or lower. Besides, in the present specification, the glass transition temperature is measured by the above-described method.

A weight-average molecular weight (Mw) of the BR is preferably 200,000 or more, more preferably 300,000 or more, because the effects of the present invention can be more appropriately obtained. Moreover, the Mw is preferably 2,000,000 or less, more preferably 1,500,000 million or less, further preferably 1,000,000 or less. Besides, in the present specification, the weight-average molecular weight (Mw) can be calculated by the above-described method.

A content of the BR in 100% by mass of the rubber component is preferably 50% by mass or less, more preferably 45% by mass or less, further preferably 40% by mass or less. A lower limit of the content of the BR is not particularly limited and may be 0% by mass, or may be, for example, 5% by mass or more, 10% by mass or more, or 20% by mass or more.

<<Other diene-based rubbers>>

The rubber component may comprise other diene-based rubber components than the above-described SBR and BR. As other diene-based rubber components, cross-linkable rubber components commonly used in the rubber industry can be used, such as, for example, a natural rubber (NR), an isoprene rubber (IR), a styrene-isoprene-butadiene copolymer rubber (SIBR), a styrene-isobutylene-styrene block copolymer (SIBS), a chloroprene rubber (CR), an acrylonitrile-butadiene rubber (NBR), a polynorbornene rubber, and the like. These other rubber components may be used alone, or two or more thereof may be used in combination.

(Rubber components other than diene-based rubber)

The rubber component can comprise a non-diene-based rubber. Examples of the non-diene-based rubber include a butyl rubber (IIR), a hydrogenated nitrile rubber (HNBR), an ethylene propylene rubber, a silicone rubber, a polyethylene chloride rubber, a fluororubber (FKM), an acrylic rubber (ACM), a hydrin rubber, and the like. The non-diene-based rubber may be used alone, or two or more thereof may be used in combination.

[Filler]

As fillers, those commonly used in the tire industry can be used, examples of which further include, in addition to silica and carbon black, aluminum hydroxide, alumina (aluminum oxide), clay, calcium carbonate, mica, and the like. The filler can be used alone, or two or more thereof can be used in combination.
As fillers other than silica, those comprising silica and carbon black and those consisting only of silica and carbon black can be appropriately used.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. Silica may be used alone, or two or more thereof may be used in combination.
A nitrogen adsorption specific surface area ($N_2SA$) of silica is preferably 140 $m^2/g$ or more, more preferably 160 $m^2/g$ or more, further preferably 170 $m^2/g$ or more, from the viewpoints of fuel efficiency and abrasion resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica is measured by the above-described method.
A content of silica based on 100 parts by mass of the rubber component is preferably 10 parts by mass or more, more preferably 15 parts by mass or more, further preferably 20 parts by mass or more, from the viewpoint of the effects of the present invention. Moreover, it is preferably 150 parts by mass or less, more preferably 130 parts by mass or less, further preferably 110 parts by mass or less, further preferably 90 parts by mass or less, from the viewpoint of abrasion resistance.

(Carbon black)

As carbon black, those commonly used in the rubber industry can be appropriately utilized, examples of which can include, for example, GPF, FEF, HAF, ISAF, SAF, and the like, or N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991 and the like. As commercial products, products from, Asahi Carbon Co., Ltd., Cabot Japan K.K., Tokai Carbon Co., Ltd., Mitsubishi Chemical Corporation, Lion Corporation, NIPPON STEEL Carbon Co. Ltd., Columbia Chemical Corporation, etc. can be used. They may be used alone, or two or more thereof may be used in combination.
A nitrogen adsorption specific surface area ($N_2SA$) of carbon black is preferably 40 $m^2/g$ or more, more preferably 50 $m^2/g$ or more, further preferably 70 $m^2/g$ or more, further preferably 100 $m^2/g$ or more, from the viewpoints of abrasion resistance, grip performance, etc. Moreover, the $N_2SA$ is preferably 300 $m^2/g$ or less, more preferably 250 $m^2/g$ or less, further preferably 200 $m^2/g$ or less, further preferably 160 $m^2/g$ or less, from the viewpoint of good dispersion. Besides, the $N_2SA$ of carbon black is measured by the above-described method.
An amount of dibutyl phthalate (DBP) oil absorbed by carbon black is preferably 50 ml/100g or more, more preferably 100 ml/100g or more, from the viewpoint of a sufficient reinforcing property. Moreover, the DBP of carbon black is preferably 200 ml/100g or less, more preferably 150 ml/100g or less, from the viewpoint of wet grip performance. Besides, the DBP of carbon black is measured by the above-described method.
A content of carbon black is preferably 1 part by mass or more, more preferably 5 parts by mass or more, further preferably 10 parts by mass or more, further preferably 15 parts by mass or more, further preferably 20 parts by mass or more, based on 100 parts by mass of the rubber component, from the viewpoints of a good ultraviolet crack performance and a good abrasion resistance. Moreover, the content is preferably 200 parts by mass or less, more preferably 150 parts by mass or less, further preferably 120 parts by mass or less, further preferably 110 parts by mass or less, further preferably 100 parts by mass or less, from the viewpoints of processability and heat generation.
A total content of fillers is preferably 50 parts by mass or more, more preferably 70 parts by mass or more, based on 100 parts by mass of the rubber component, from the viewpoint of a sufficient reinforcing property. On the other hand, the content is preferably 250 parts by mass or less, more preferably 180 parts by mass or less, further preferably 150 parts by mass or less, from the viewpoint of wet grip performance.

(Silane coupling agent)

It is preferable to use a silane coupling agent for the rubber composition. The silane coupling agent is not particularly limited, and any silane coupling agent conventionally used in the rubber industry can be used. Specific examples of the silane coupling agent include, for example, a silane coupling agent having a sulfide group such as bis(3-triethoxysilylpropyl)disulfide and bis(3-triethoxysilylpropyl)tetrasulfide; a silane coupling agent having a mercapto group such as 3-mercaptopropyltrimethoxysilane, 3-mercaptopropyltriethoxysilane, 2-mercaptoethyltrimethoxysilane, 2-mercaptoethyltriethoxysilane, and a mercapto-based silane coupling agent manufactured by Momentive Performance Materials; a silane coupling agents having a thioester groups such as 3- octanoylthio-1-propyltriethoxysilane, 3-hexanoylthio-1-propyltriethoxysilane, and 3-octanoylthio-1-propyltrimethoxysilane; a silane coupling agent having a vinyl group such as vinyltriethoxysilane and vinyltrimethoxysilane; a silane coupling agent having an amino group such as 3-aminopropyltriethoxysilane, 3-aminopropyltrimethoxysilane, and 3-(2-aminoethyl)aminopropyltriethoxysilane; a glycidoxy-based silane coupling agent such as $\gamma$-glycidoxypropyltriethoxysilane and $\gamma$-glycidoxypropyltrimethoxysilane; a nitro-based silane coupling agent such as 3-nitropropyltrimethoxysilane and 3-nitropropyltriethoxysilane; a chloro-based silane coupling agent such as 3-chloropropyltrimethoxysilane and 3-chloropropyltriethoxysilane, and the like. Among them, a silane coupling agent having a sulfide group, a silane coupling agent having a mercapto group, and a silane coupling agent having a thioester group are preferable, and a silane coupling agent having a sulfide group is more preferable. These silane coupling agents may be used alone, or two or more thereof may be used in combination.

A content of the silane coupling agent is preferably 1 part by mass or more, more preferably 2 parts by mass or more, further preferably 5 parts by mass or more, based on 100 parts by mass of silica, from the viewpoint of a sufficient chipping resistance. Moreover, the content of the silane coupling agent is preferably 20 parts by mass or less, more preferably 15 parts by mass or less, further preferably 12 parts by mass or less, based on 100 parts by mass of silica, from the viewpoint of a compounding effect commensurate with the content.

[Oil]

The rubber composition can comprise oil. Oil is not particularly limited, and, for example, a process oil, vegetable oils and fats, and mixtures thereof can be used. Examples of the process oil can include a paraffin-based process oil, a naphthen-based process oil, an aromatic-based process oil, and the like. Moreover, examples of the vegetable oils and fats can include a castor oil, a cottonseed oil, a linseed oil, a rapeseed oil, a soybean oil, a palm oil, a coconut oil, a peanut oil, rosin, a pine oil, pine tar, a tall oil, a corn oil, a rice oil, a safflower oil, a sesame oil, an olive oil, a sunflower oil, a palm kernel oil, a camellia oil, a jojoba oil, a macadamia nut oil, a tung oil, and the like. Among them, an aromatic-based process oil is preferable. Oil may be used alone, or two or more thereof may be used in combination.

A content of oil is preferably 10 parts by mass or more, more preferably 15 parts by mass or more, further preferably 20 parts by mass or more, based on 100 parts by mass of the rubber component, from the viewpoint of the effects of the present invention. The content is preferably 80 parts by mass or less, more preferably 70 parts by mass or less, further preferably 60 parts by mass or less, more preferably 50 parts by mass or less, from the viewpoint of steering stability. Besides, in the present specification, the content of oil also includes an amount of oil contained in an oil-extended rubber.

[Other compounding agents]

The rubber composition can appropriately comprise compounding agents conventionally and commonly used in the tire industry, such as, for example, resin, a liquid polymer, wax, processing aid, an antioxidant, stearic acid, zinc oxide, an inorganic potassium salt, a vulcanization agent such as sulfur, and a vulcanization accelerator, in addition to the above-described components.

(Resin)

As resin, a resin component commonly used in the tire industry can be used. Examples of such resin component include, for example, a petroleum resin, a terpene-based resin, a rosin-based resin, a phenol-based resin, a coumarone-based resin, and the like, and they may be used alone, or two or more thereof may be used in combination. Among them, a petroleum resin is preferable from the viewpoint of the effects of the present invention.

<<Petroleum resin>>

The petroleum resin is not particularly limited, examples of which include an aliphatic-based petroleum resin, an aromatic-based petroleum resin, and an aliphatic/aromatic copolymerization-based petroleum resin, and they may be used alone, or two or more thereof may be used in combination. As the aliphatic-based petroleum resin, a resin obtained by cationically polymerizing an unsaturated monomer such as isoprene or cyclopentadiene which is a petroleum fraction (C5 fraction) corresponding to 4 to 5 carbon atoms (also referred to as a C5-based petroleum resin) can be used. As the aromatic-based petroleum resin, a resin obtained by cationically polymerizing a monomer such as vinyltoluene, alkylstyrene, and indene which is a petroleum fraction (C9 fraction) corresponding to 8 to 10 carbon atoms (also referred to as a C9-based petroleum resin) can be used. As the aliphatic/aromatic copolymerization-based petroleum resin, a resin obtained by copolymerizing the above-described C5 fraction and C9 fraction (also referred to as a C5-C9-based petroleum resin) is used. Moreover, a resin, in which the above-described petroleum resin is hydrogenated, may be used. Among them, an aromatic-based petroleum resin is appropriately used. Examples of the aromatic-based petroleum resin include, for example, an α-methylstyrene-based resin. Examples of the α-methylstyrene-based resin include a homopolymer of α-methylstyrene (poly-α-methylstyrene) and a copolymer of α-methylstyrene and another compound including an aromatic compound or a phenol-based compound. Examples of another compound that may constitute this copolymer include styrene, methylstyrene, methoxystyrene, divinylbenzene, and the like. As the α-methylstyrene-based resin, one manufactured by Arizona Chemical Company, LLC, and the like are appropriately used.

<<Terpene-based resin>>

Examples of the terpene-based resin include a polyterpene resin, a terpene phenol resin, a terpene styrene resin, and the like, and they may be used alone, or two or more thereof may be used in combination. Among them, a terpene styrene resin is appropriately used because it is particularly compatible with both a SBR and a BR and sulfur becomes easily dispersed in the rubber component.
The polyterpene resin is a resin made from at least one selected from terpene compounds such as α-pinene, β-pinene, limonene, and dipentene. The terpene-based resin may be used alone, or two or more thereof may be used in combination.
The terpene phenol resin is a resin made from the terpene compound and the phenol-based compound. The terpene styrene resin is a resin made from the terpene compound and styrene. The polyterpene resin and the terpene styrene resin may be hydrogenated (a hydrogenated polyterpene resin, a hydrogenated terpene styrene resin). The hydrogenation treatment to the terpene-based resin can be performed by a known method, and a commercially available hydrogenated resin can also be used.
In the present invention, a commercially available product may be used as the terpene-based resin. Examples of such commercial product include those manufactured and sold by Yasuhara Chemical Co., Ltd., etc.

<<Rosin-based resin>>

The rosin-based resin is not particularly limited, examples of which include, for example, a natural resin rosin, a rosin-modified resin obtained by modifying the natural resin rosin with hydrogenation, disproportionation, dimerization, esterification, etc., and the like, and they may be used alone, or two or more thereof may be used in combination.

«Phenol-based resin»

The phenol-based resin is not particularly limited, examples of which include a phenol formaldehyde resin, an alkylphenol formaldehyde resin, an alkylphenol acetylene resin, an oil-modified phenol formaldehyde resin, and the like, and they may be used alone, or two or more thereof may be used in combination.

<<Coumarone-based resin>>

The coumarone-based resin is a resin comprising coumarone as a main component, examples of which include, for example, a coumarone resin, a coumarone indene resin, a copolymer resin comprising coumarone, indene, and styrene as main components, and the like. They may be used alone, or two or more thereof may be used in combination.

<<Content of resin>>

A content of resin based on 100 parts by mass of the rubber component is preferably 1 part by mass or more, more preferably 2 parts by mass or more, further preferably 3 parts by mass or more, particularly preferably 5 parts by mass or more, from the viewpoints of adhesive performance and grip performance. Moreover, it is preferably 50 parts by mass or less, more preferably 40 parts by mass or less, further preferably 30 parts by mass or less, particularly preferably 25 parts by mass or less, from the viewpoints of abrasion resistance and grip performance.

<<Softening point of resin>>

A softening point of resin is preferably 160°C or lower, more preferably 145°C or lower, further preferably 130°C or lower, from the viewpoint of grip performance. Moreover, the softening point is preferably 20°C or higher, more preferably 35°C or higher, further preferably 50°C or higher, further preferably 80°C or higher, from the viewpoint of grip performance. Besides, the softening point is measured by the above-described method.

<<Weight-average molecular weight of resin>>

A weight-average molecular weight (Mw) of resin is preferably 300 or more, more preferably 400 or more, further preferably 500 or more, from the viewpoints of less volatilization and a good grip performance. Moreover, the Mw is preferably 15,000 or less, more preferably 10,000 or less, further preferably 8,000 or less. Besides, the weight-average molecular weight (Mw) can be calculated by the above-described method.

«SP value of resin»

The SP value of resin is preferably in a range of 8 to 11, more preferably in a range of 8 to 10, further preferably in a range of 8.3 to 9.5, from the viewpoint of an excellent compatibility with the rubber component (particularly, a SBR). By using a resin having an SP value within the above-described ranges, compatibility with a SBR and a BR can be improved, and abrasion resistance and elongation at break can be improved. Besides, the SP value is calculated by the above-described method.

(Liquid polymer)

The liquid polymer is not particularly limited as long as it is a polymer in a liquid state at room temperature (25°C), examples of which include, for example, liquid diene-based polymers such as a liquid styrene-butadiene copolymer (liquid SBR), a liquid butadiene polymer (liquid BR), a liquid isoprene polymer (liquid IR), and a liquid styrene-isoprene copolymer (liquid SIR). The liquid polymer may be used alone, or two or more thereof may be used in combination. Among them, a liquid SBR is preferable from the viewpoint of grip performance. As for a molecular weight of the liquid polymer, a weight-average molecular weight in terms of polystyrene as measured by gel permeation chromatography (GPC) is preferably $1.0 \times 10^3$ to $2.0 \times 10^5$. Besides, the weight-average molecular weight (Mw) can be calculated by the above-described method.

A content of the liquid polymer when compounded based on 100 parts by mass of the rubber component is preferably 1 part by mass or more, more preferably 5 parts by mass or more, from the viewpoint of grip performance. Moreover, it is preferably 40 parts by mass or less, more preferably 30 parts by mass or less, further preferably 20 parts by mass or less, particularly preferably 10 parts by mass or less, from the viewpoint of abrasion resistance.

(Wax)

As wax, those conventionally and commonly used in the tire industry can be used, which may be used alone, or two or more thereof may be used in combination. A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of suppressing whitening of a tire due to bloom.

(Processing aid)

As processing aid, those conventionally and commonly used in the tire industry can be used, examples of which include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. They may be used alone, or two or more thereof may be used in combination. A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 8 parts by mass or less, from the viewpoints of abrasion resistance and breaking strength.

(Antioxidant)

As antioxidants, those conventionally and commonly used in the tire industry can be used. Specific examples of antioxidants include, for example, amine-based, quinoline-based, quinone-based, phenol-based, imidazole-based, and phenylenediamine-based compounds, and antioxidants such as a carbamic acid metal salt. Among them, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediam ine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine, and quinoline-based antioxidants such as 2,2,4-trimethyl-1 ,2-dihydroquinoline polymer and 6-ethoxy-2,2,4-trimethyl-1,2-dihydroquinoline are preferable. These antioxidants may be used alone, or two or more thereof may be used in combination.

A content of the antioxidant when compounded based on 100 parts by mass of the rubber component is preferably 0.5 parts by mass or more, or may be 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

(Stearic acid)

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

(Zinc oxide)

A content of zinc oxide when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.

(Inorganic potassium salt)

As inorganic potassium salts, those conventionally and commonly used in the tire industry can be used, which may be used alone, or two or more thereof may be used in combination. Examples of the inorganic potassium salt include, for example, one or more potassium salts selected from the group consisting of potassium carbonate, potassium hydrogencarbonate, and potassium tetraborate, and among them, potassium tetraborate is preferable.

A content of the inorganic potassium salt is preferably 0.3 parts by mass or more, more preferably 0.4 parts by mass or more, based on 100 parts by mass of silica, from the viewpoint of extrudability. Moreover, it is preferably 3 parts by mass or less, more preferably 2.5 parts by mass or less, more preferably 2 parts by mass or less, further preferably 1.45 parts by mass or less, based on 100 parts by mass of silica, from the viewpoint of abrasion resistance.

(Vulcanizing agent)

Sulfur is appropriately used as a vulcanizing agent. As sulfur, a powdery sulfur, oil a processing sulfur, a precipitated sulfur, a colloidal sulfur, an insoluble sulfur, a highly dispersible sulfur, and the like can be used, each of which may be used alone, or two or more thereof may be used in combination.

Examples of vulcanizing agents other than sulfur include, for example, vulcanizing agents comprising a sulfur atom such as, for example, sodium hexamethylene-1,6-bisthiosulfate dihydrate and 1,6-bis(N,N'-dibenzylthiocarbamoyldithio)hexane, organic peroxides such as dicumyl peroxide, and the like. As vulcanizing agents other than sulfur, for example, those manufactured by Taoka Chemical Co., Ltd., those manufactured by Flexsys, those manufactured by LANXESS, and the like can be used.

A content of sulfur when compounded as a vulcanizing agent based on 100 parts by mass of the rubber component is preferably 0.5 parts by mass or more, more preferably 0.7 parts by mass or more, from the viewpoints of securing a sufficient vulcanization reaction and obtaining good grip performance and abrasion resistance. Moreover, it is preferably 5.0 parts by mass or less, more preferably 4.0 parts by mass or less, further preferably 3.0 parts by mass or less, from the viewpoint of suppressing deterioration.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, at least one of sulfenamide-based, guanidine-based, and thiazole-based vulcanization accelerators is preferable, and it is more preferable to use sulfenamide-based and guanidine-based vulcanization accelerators in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-tert-butyl-2-benzothiazolylsulfenamide (TBBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

<Producing method>

[Production of rubber composition]

As a method of producing the rubber composition of the present invention, a known method can be appropriately applied. For example, it can be produced by kneading each of the above-described components using a rubber kneading apparatus such as an open roll and a closed type kneader (Bunbury mixer, kneader, etc.). The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired. Examples of a kneading condition include, but not particularly limited to, for example, in the base kneading step, a method of kneading at a discharge temperature from 150 to 170°C for 3 to 10 minutes, and in the final kneading step, a method of kneading at 50 to 110°C for 1 to 5 minutes.

When the rubber composition of the present invention is produced using each of the above-described components, a compounding of each component can be determined as appropriate, depending on respective physical properties of a rubber composition of a crown part and a rubber composition of a shoulder part.

[Production of tire]

The rubber composition obtained above is extruded into a desired tread shape at an unvulcanized stage and molded together with other tire members by a normal method on a tire molding machine, thereby allowing for production of an unvulcanized tire. By heating and pressurizing (vulcanizing) this unvulcanized tire in a vulcanizer, a tire for automated two-wheeled vehicle of the present invention can be obtained. Examples of a vulcanization condition include, but not particularly limited to, for example, a method of vulcanizing at 150 to 200°C for 5 to 30 minutes.

<Application>

A type of the tire for automated two-wheeled vehicle of the present invention is not particularly limited, and it may be either a pneumatic tire or a solid tire, but it is preferably used as a pneumatic tire. Moreover, it can be used for any of various applications of such as an on-road tire, an off-road tire, and a racing tire.

EXAMPLE

The present invention will be specifically described below based on Examples, but the present invention is not limited to Examples only.

<Various chemicals>

SBR1: TUFDENE 4850 (unmodified S-SBR from Asahi Kasei Corporation, styrene content: 40% by mass, vinyl bond amount: 46%, Tg: -25°C, comprising 50 parts by mass of an extending oil based on 100 parts by mass of a rubber solid content)

SBR2: TUFDENE 3830 (unmodified S-SBR of Asahi Kasei Corporation, styrene content: 33% by mass, vinyl bond amount: 34%, Tg: -39°C, comprising 37.5 parts by mass of an extending oil based on 100 parts by mass of a rubber solid content)

BR1: Ubepol BR150B (high-cis BR of Ube Industries, Ltd., synthesized using a Co-based catalyst, cis content: 97%, vinyl bond amount: 1%, Tg: -107°C)

Carbon Black 1: Show Black N110 (available from Cabot Japan K.K., $N_2SA$: 142 m$^2$/g (BET value), DBP oil absorption: 115 mL/100g)

Silica 1: ULTRASIL VN3 (available from Evonik Degussa GmbH, $N_2SA$: 175 m$^2$/g (BET value))

Silane coupling agent 1: Si69 (manufactured by Evonik Degussa GmbH, bis(3-(triethoxysilyl)propyl)tetrasulfide)

Oil: Diana Process NH-70S (aromatic process oil from Idemitsu Kosan Co., Ltd.)

Resin: Sylvatraxx 4401 (aromatic petroleum resin ($\alpha$-methylstyrene resin: copolymer of $\alpha$-methylstyrene and styrene) from Kraton Corporation, softening point: 85°C, SP value: 9.1)

Wax: Ozoace 0355 (available from Nippon Seiro Co., Ltd.)

Antioxidant: Antigen 6C (N-(1,3-dimethylbutyl)-N'-phenyl-p-phenylenediamine, available from Sumitomo Chemical Co., Ltd.)

Stearic acid: Stearic acid "CAMELLIA" (available from NOF CORPORATION)

Zinc oxide: Ginrei R (available from Toho Zinc Co., Ltd.)

Sulfur: HK-200-5 (5% oil-containing powdered sulfur from Hosoi Chemical Industry Co., Ltd.)

Vulcanization accelerator 1: Nocceler NS-P (N-tert-butyl-2-benzothiazolylsulfenamide (TBBS), available from Ouchi Shinko Chemical Industry Co., Ltd.)

Vulcanization accelerator 2: Nocceler D (1,3-diphenylguanidine (DPG), available from Ouchi Shinko Chemical Industry Co., Ltd.)

<Production of test tire>

According to the compounding formulations (C1 to C7) for the rubber composition for crown part shown in Table 1, chemicals other than sulfur and vulcanization accelerators were kneaded using a 1.7 L Banbury mixer manufactured by Kobe Steel, Ltd. at a discharge temperature of 150°C for 5 minutes. Next, sulfur and vulcanization accelerators were added to the obtained kneaded product, and the mixture was kneaded for 4 minutes until the temperature reached 105°C using an open roll to obtain an unvulcanized rubber composition for crown part.

On the other hand, according to the compounding formulations (S1 to S6) for the rubber composition for shoulder part shown in Table 1, the similar treatment was performed as in the case of the crown part to obtain an unvulcanized rubber composition for shoulder part.

A test tire having a basic structure of FIG. 1 and a basic pattern of FIG. 4 or 5 was produced based on the specifications in Table 2. That is, the unvulcanized rubber composition for crown part and the unvulcanized rubber composition for shoulder part obtained above were molded into a shape of the crown part and a shape of the pair of shoulder parts of the tread, respectively, and attached together with other tire members to produce an unvulcanized tire, and the unvulcanized tire was press-vulcanized at 170°C for 12 minutes to obtain a test tire. The test tires had a front tire size of 120/70ZR17 and a rear tire size of 180/55ZR17.

<Measurement/evaluation>

Each measurement and each evaluation were performed according to a method shown below. The results are shown in Tables 1 and 3.

[Tan $\delta$]

Using EPLEXOR series manufactured by gabo Systemtechnik GmbH, a 0°C tan $\delta$ was measured under a condition of a temperature of 0°C, a frequency of 10 Hz, an initial strain of 10%, a dynamic strain of 2.5%, and an extension mode, and a 70°C tan $\delta$ was measured under a condition of a temperature of 70°C, a frequency 10 Hz, an initial strain 10%, a dynamic strain of 1%, and an extension mode. As a measurement sample, a vulcanized rubber composition with 20 mm in length $\times$ 4 mm in width $\times$ 1 mm in thickness, which was produced by being cut out from the tread part of the tire with the tire circumferential direction being as a length direction, was used.

[Tan $\delta$ peak temperature]

The tan $\delta$ peak temperature of the vulcanized rubber composition was determined as a temperature corresponding to a largest tan $\delta$ value (tan $\delta$ peak temperature) in a temperature distribution curve of tan $\delta$ obtained by measurement, under a condition of a frequency of 10 Hz, an initial strain of 10%, a dynamic strain of $\pm$ 0.5%, and a temperature rising rate at 2°C/min, using EPLEXOR series manufactured by gabo Systemtechnik GmbH. As a measurement sample, a vulcanized rubber composition with 20 mm length $\times$ 4 mm width $\times$ 1 mm thickness, which was produced by being cut out from the tread part of the tire with the tire circumferential direction being as a length direction, was used.

[Hardness]

For the hardness of the vulcanized rubber composition, a sample for measuring hardness was prepared by cutting out from the tread part forming a grounding surface of a test tire so that a tire radial direction became a thickness direction of the sample, and a type A durometer was pressed against the sample from the grounding surface side to measure a hardness in accordance with JIS K 6253.

[M300]

For M300, a dumbbell-shaped No. 7 specimen with a thickness of 1 mm, which was cut out from inside of a rubber layer of a tread part of each test tire so that a tire circumferential direction became a tensile direction, was prepared, and according to JIS K 6251 "Rubber, vulcanized or thermoplastics-Determination of tensile stress-strain properties", a tensile test was performed under a condition of a tensile speed of 3.3 mm/sec in an atmosphere of 23°C to measure a stress at 300% elongation (M300) (MPa).

[Dry peeling resistance]

Each test tire was incorporated into a standardized rim (front wheel: MT3.50 $\times$ 17, rear wheel: MT5.50$\times$17) and mounted on a test vehicle (automated two-wheeled vehicle with a displacement of 750cc (4 cycles)). The air pressure was adjusted to 250 kPa for the front tires and 290 kPa for the rear tires.
This test vehicle was made run 5000 km on a test course having a dry asphalt road surface, and a peeling condition of an interface between a crown part and a shoulder part of a tread was visually evaluated. The evaluation value was indicated as an index with reference Comparative example being as 100. The results show that the larger the numerical value is, the more excellent the evaluation is.

[Wet crack resistance]

The test vehicle was made run 5000 km on a test course having a wet asphalt road surface, and a condition for crack generation in a tread was visually evaluated. The evaluation value was indicated as an index with reference Comparative example being as 100. The results show that the larger the numerical value is, the more excellent the evaluation is.

Table 1

| | Compounding | | | | | | | | | | | | |
| | C1 | C2 | C3 | C4 | C5 | C6 | C7 | S1 | S2 | S3 | S4 | S5 | S6 |
| --- | --- | --- | --- | --- | --- | --- | --- | --- | --- | --- | --- | --- | --- |
| Compounding amount (part by mass) | | | | | | | | | | | | | |
| SBR1 | - | - | - | - | 90 | - | 90 | 90 | 90 | 150 | 150 | - | 90 |
| SBR2 | 82.5 | 82.5 | 137.5 | 137.5 | - | 82.5 | - | - | - | - | - | 82.5 | |
| BR1 | 40 | 40 | - | - | 40 | 40 | 40 | 40 | 40 | - | - | 40 | 40 |
| Carbon black 1 | 50 | 50 | 40 | 20 | 60 | 50 | 30 | 30 | 30 | 20 | 10 | 50 | 60 |
| Silica 1 | 20 | 50 | 50 | 90 | 20 | 20 | 40 | 40 | 60 | 60 | 90 | 20 | 20 |
| Silane coupling agent 1 | 1.6 | 4.0 | 4.0 | 7.2 | 1.6 | 1.6 | 3.2 | 3.2 | 4.8 | 4.8 | 7.2 | 1.6 | 1.6 |
| Oil | 7.5 | 27.5 | 7.5 | 12.5 | 5 | 22.5 | 15 | 5 | 25 | - | 10 | 22.5 | 5 |
| Resin | 15 | 15 | 15 | 25 | 10 | 15 | 10 | 10 | 10 | 10 | 10 | 15 | 10 |
| Wax | 1 | 1 | 1 | 1 | 1 | 1 | 1 | 1 | 1 | 1 | 1 | 1 | 1 |
| Antioxidant | 1 | 1 | 1 | 1 | 1 | 1 | 1 | 1 | 1 | 1 | 1 | 1 | 1 |
| Stearic acid | 2 | 2 | 2 | 2 | 2 | 2 | 2 | 2 | 2 | 2 | 2 | 2 | 2 |
| Zinc oxide | 2 | 2 | 2 | 2 | 2 | 2 | 2 | 2 | 2 | 2 | 2 | 2 | 2 |
| Sulfur | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator 1 | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator 2 | 1 | 1.5 | 1.5 | 2 | 1 | 1 | 1.5 | 1.5 | 1.5 | 1.5 | 2 | 1 | 1 |
| Physical properties | | | | | | | | | | | | | |
| 70°C tan $\delta$ | 0.19 | 0.25 | 0.21 | 0.23 | 0.24 | 0.19 | 0.18 | 0.18 | 0.22 | 0.19 | 0.21 | 0.19 | 0.24 |
| 0°C tan $\delta$ | 0.58 | 0.60 | 0.88 | 1.00 | 0.83 | 0.58 | 0.79 | 0.78 | 0.81 | 1.25 | 1.35 | 0.58 | 0.83 |
| Tan $\delta$ peak temperature (°C) | -30 | -30 | -17 | -12 | -22 | -30 | -18 | -17 | -19 | -5 | -5 | -30 | -22 |
| Hardness | 54 | 57 | 57 | 59 | 59 | 50 | 52 | 54 | 55 | 55 | 58 | 50 | 60 |
| M300 (MPa) | 6.5 | 5.5 | 6.7 | 5.5 | 8.5 | 4.0 | 4.5 | 6.0 | 4.5 | 6.0 | 6.0 | 4.0 | 8.5 |

Table 2

| | | Tire specification | | | | | | | | |
|---|---|---|---|---|---|---|---|---|---|---|
| | | T1 | T2 | T3 | T4 | T5 | T6 | T7 | T8 | T9 |
| Tire structure | | FIG. 1 | FIG. 1 | FIG. 1 | FIG. 1 | FIG. 1 | FIG. 1 | FIG. 1 | FIG. 1 | FIG. 1 |
| Tread pattern | | FIG. 4 | FIG. 4 | FIG. 4 | FIG. 4 | FIG. 4 | FIG. 5 | FIG. 4 | FIG. 4 | FIG. 4 |
| Groove | | | | | | | | | | |
| Groove depth D (mm) | | 6.0 | 6.0 | 6.0 | 6.0 | 6.0 | 5.0 | 6.0 | 6.0 | 6.0 |
| Groove width W (mm) | | 5.0 | 5.0 | 5.0 | 5.0 | 5.0 | 3.5 | 5.0 | 5.0 | 5.0 |
| Circumferential length component Lc (mm) | | 40.0 | 40.0 | 40.0 | 40.0 | 40.0 | 35.0 | 40.0 | 40.0 | 40.0 |
| Groove bottom thickness H (mm) | | 2.0 | 2.0 | 2.0 | 2.0 | 2.0 | 2.5 | 2.0 | 2.0 | 2.0 |
| Groove cross-sectional area S (mm$^2$) | | 28.5 | 28.5 | 28.5 | 28.5 | 28.5 | 17.0 | 28.5 | 28.5 | 28.5 |

Table 3

| | Example | | | | | | Comparative example | | |
|---|---|---|---|---|---|---|---|---|---|
| | 1 | 2 | 3 | 4 | 5 | 6 | 1 | 2 | 3 |
| Tire specification | T1 | T2 | T3 | T4 | T5 | T6 | T7 | T8 | T9 |
| Compounding for crown (Cr) | C1 | C2 | C2 | C3 | C4 | C2 | C5 | C6 | C7 |
| 70°C tan $\delta_{Cr}$ | 0.19 | 0.25 | 0.25 | 0.21 | 0.23 | 0.25 | 0.24 | 0.19 | 0.18 |
| 0°C tan $\delta_{Cr}$ | 0.58 | 0.60 | 0.60 | 0.88 | 1.00 | 0.60 | 0.83 | 0.58 | 0.79 |
| tan $\delta$ peak temperature (°C) | -30 | -30 | -30 | -17 | -12 | -30 | -22 | -30 | -18 |
| Hardness | 54 | 57 | 57 | 57 | 59 | 57 | 59 | 50 | 52 |
| M300 (MPa) | 6.5 | 5.5 | 5.5 | 6.7 | 5.5 | 5.5 | 8.5 | 4.0 | 4.5 |
| Compounding for shoulder (Sh) | S1 | S1 | S2 | S3 | S4 | S2 | S5 | S6 | S5 |
| 70°C tan $\delta_{Sh}$ | 0.18 | 0.18 | 0.22 | 0.19 | 0.21 | 0.22 | 0.19 | 0.24 | 0.19 |
| 0°C tan $\delta_{Sh}$ | 0.78 | 0.78 | 0.81 | 1.25 | 1.35 | 0.81 | 0.58 | 0.83 | 0.58 |
| tan $\delta$ peak temperature (°C) | -17 | -17 | -19 | -5 | -5 | -19 | -30 | -22 | -30 |
| Hardness | 54 | 54 | 55 | 55 | 58 | 55 | 50 | 60 | 50 |
| M300 (MPa) | 6.0 | 6.0 | 4.5 | 6.0 | 6.0 | 4.5 | 4.0 | 8.5 | 4.0 |
| 70°C tan $\delta$ | Cr>Sh | Cr>Sh | Cr>Sh | Cr>Sh | Cr>Sh | Cr>Sh | Cr>Sh | Cr<Sh | Cr<Sh |
| 0°C tan $\delta$ | Cr<Sh | Cr<Sh | Cr<Sh | Cr<Sh | Cr<Sh | Cr<Sh | Cr>Sh | Cr<Sh | Cr>Sh |
| Groove | | | | | | | | | |
| Groove depth D (mm) | 6.0 | 6.0 | 6.0 | 6.0 | 6.0 | 5.0 | 6.0 | 6.0 | 6.0 |
| Groove width W (mm) | 5.0 | 5.0 | 5.0 | 5.0 | 5.0 | 3.5 | 5.0 | 5.0 | 5.0 |
| Circumferential length component $_Lc$ (mm) | 40.0 | 40.0 | 40.0 | 40.0 | 40.0 | 35.0 | 40.0 | 40.0 | 40.0 |
| Groove bottom thickness H (mm) | 2.0 | 2.0 | 2.0 | 2.0 | 2.0 | 2.5 | 2.0 | 2.0 | 2.0 |
| Groove cross-sectional area S (mm$^2$) | 28.5 | 28.5 | 28.5 | 28.5 | 28.5 | 17.0 | 28.5 | 28.5 | 28.5 |
| Inequality (1): D × 70°C tan $\delta_{Cr}$ (>1.20) | 1.14 | 1.50 | 1.50 | 1.26 | 1.38 | 1.25 | 1.44 | 1.14 | 1.08 |

(continued)

| Groove | | | | | | | | | |
|---|---|---|---|---|---|---|---|---|---|
| Inequality (2): W × 70°C tan $\delta_{Cr}$ (>0.80) | 0.95 | 1.25 | 1.25 | 1.05 | 1.15 | 0.88 | 1.20 | 0.95 | 0.90 |
| Inequality (3): LC × (70°C tan $\delta_{Cr}$ - 70°C tan | 0.40 | 2.80 | 1.20 | 0.80 | 0.80 | 1.05 | 2.00 | - | - |

| | Example | | | | | Comparative example | | | |
|---|---|---|---|---|---|---|---|---|---|
| | 1 | 2 | 3 | 4 | 5 | 6 | 1 | 2 | 3 |
| $\delta_{Sh}$) (>0.05) | | | | | | | | | |
| Inequality (4): H/0°C tan $\delta_{Cr}$ (>1.3) | 3.4 | 3.3 | 3.3 | 2.3 | 2.0 | 4.2 | 2.4 | 3.4 | 2.5 |
| Inequality (5): S/(0°C tan $\delta_{Sh}$ - 0°C tan 5cr) (<150) | 143 | 158 | 136 | 77 | 81 | 81 | - | 114 | - |
| tan $\delta$ peak temperature (°C) | Cr<Sh | Cr<Sh | Cr<Sh | Cr<Sh | Cr<Sh | Cr<Sh | Cr>Sh | Cr<Sh | Cr>Sh |
| Hardness | Cr=Sh | Cr>Sh | Cr>Sh | Cr>Sh | Cr>Sh | Cr>Sh | Cr>Sh | Cr<Sh | Cr>Sh |
| M300 (MPa) | Cr>Sh | Cr<Sh | Cr>Sh | Cr>Sh | Cr<Sh | Cr>Sh | Cr>Sh | Cr<Sh | Cr>Sh |
| Dry peeling resistance | 105 | 115 | 115 | 110 | 115 | 120 | 110 | 90 | 90 |
| Wet crack resistance | 105 | 105 | 110 | 120 | 125 | 115 | 90 | 110 | 90 |

From Table 3, it can be found that, in the tire for automated two-wheeled vehicle of the present invention, a sum of the indexes of the dry peeling resistance and the wet crack resistance is improved.

REFERENCE SIGNS LIST

1. Tire for automated two-wheeled vehicle
2. Tread part
2A. Tread surface
2e. Tread edge
3. Sidewall part
4. Bead part
5. Bead core
6. Carcass
7. Belt layer
8. Bead apex
9. Tread rubber
9A. Crown part
9B. Shoulder part
100. Road surface
C. Equator
D. Groove depth
H. Groove bottom thickness
LC. Groove circumferential length component
S. Groove cross-sectional area
W. Groove width
X. Grounding surface width

Y Cutting line
TW. Tread width
Cr. Crown part
Sh. Shoulder part
R. Tire rotation direction

**Claims**

1. A tire (1) for automated two-wheeled vehicle, the tire comprising a tread part (2), the tread part (2) comprising a crown part (9A; Cr) located at a center in a tire axial direction and a pair of shoulder parts (9B; Sh) located outside the crown part (9A; Cr),

   wherein a tan $\delta$ at 70°C of a rubber composition of the crown part (9A; Cr) (70°C tan $S_{Cr}$) is larger than a tan $\delta$ at 70°C of a rubber composition of the shoulder part (9B; Sh) (70°C tan $5_{Sh}$), wherein the "70°C tan $\delta$" is a loss tangent measured at a temperature at 70°C, a frequency of 10 Hz, an initial strain of 10%, a dynamic strain of 1%, and an extension mode,
   wherein a tan $\delta$ at 0°C of the rubber composition of the crown part (9A; Cr) (0°C tan $\delta_{Cr}$) is smaller than a tan $\delta$ at 0°C of the rubber composition of the shoulder part (9B; Sh) (0°C tan $\delta_{Sh}$), wherein the "0°C tan $\delta$" is a loss tangent measured at a temperature at 0°C, a frequency of 10 Hz, an initial strain of 10%, a dynamic strain of 2.5%, and an extension mode,
   wherein a tread surface (2A) of the tread part (2) comprises a groove, and
   wherein the groove straddles over a boundary between the crown part (9A; Cr) and the shoulder part (9B; Sh) and does not straddle over an equator (C).

2. The tire (1) for automated two-wheeled vehicle of claim 1, wherein, a largest groove depth D (mm) of the groove satisfies the following inequality (1):

$$\text{Inequality (1): D} \times 70°C \tan \delta_{Cr} > 1.20$$

3. The tire (1) for automated two-wheeled vehicle of claim 1 or 2, wherein, a largest groove width W (mm) of the groove satisfies the following inequality (2):

$$\text{Inequality (2): W} \times 70°C \tan \delta_{Cr} > 0.80$$

4. The tire (1) for automated two-wheeled vehicle of any one of claims 1 to 3, wherein, a largest groove circumferential length component Lc (mm) satisfies the following inequality (3):

$$\text{Inequality (3): L}_C \times (70°C \tan \delta_{Cr} - 70°C \tan \delta_{Sh}) > 0.05$$

5. The tire (1) for automated two-wheeled vehicle of any one of claims 1 to 4, wherein, a smallest groove bottom thickness H (mm) of the groove satisfies the following inequality (4):

$$\text{Inequality (4): H/0°C} \tan \delta_{Cr} > 1.3$$

6. The tire (1) for automated two-wheeled vehicle of any one of claims 1 to 5, wherein, a largest groove cross-sectional area 5 (mm$^2$) of the groove satisfies the following inequality (5):

$$\text{Inequality (5): S/(0°C} \tan \delta_{Sh} - 0°C \tan \delta_{Cr}) < 150$$

7. The tire (1) for automated two-wheeled vehicle of any one of claims 1 to 6, wherein a tan $\delta$ peak temperature of the rubber composition of the crown part (9A; Cr) ($T_{Cr}$) is lower than a tan $\delta$ peak temperature of the rubber composition of the shoulder part (9B; Sh) ($T_{Sh}$), wherein the "tan $\delta$ peak temperature of the rubber composition" is determined as a temperature corresponding to a largest tan $\delta$ value in a temperature distribution curve of tan $\delta$ obtained by measurement at a frequency of 10 Hz, an initial strain of 10%, a dynamic strain of $\pm$ 0.5%, and a temperature rising rate at 2°C/min.

8. The tire (1) for automated two-wheeled vehicle of any one of claims 1 to 7, wherein a hardness of the rubber composition of the crown part (9A; Cr) is higher than a hardness of the rubber composition of the shoulder part (9B; Sh), wherein the hardness is determined with a type A durometer at 23°C in accordance with JIS K 6253.

9. The tire (1) for automated two-wheeled vehicle of any one of claims 1 to 8, wherein a stress at 300% elongation of the rubber composition of the crown part (9A; Cr) ($M300_{Cr}$) is higher than a stress at 300% elongation of the rubber composition of the shoulder part (9B; Sh) ($M300_{Sh}$), wherein a stress at 300% elongation (M300) [MPa] is determined according to JIS K 6251, at a tensile speed of 3.3 mm/sec at 23°C.

**Patentansprüche**

1. Reifen (1) für ein automatisiertes Zweiradfahrzeug, wobei der Reifen einen Laufflächenteil (2) umfasst, wobei der Laufflächenteil (2) einen Kronenteil (9A; Cr), der in der Mitte in der axialen Richtung des Reifens angeordnet ist, und ein Paar Schulterteile (9B; Sh) umfasst, die außerhalb des Kronenteils (9A; Cr) angeordnet sind,

   wobei ein tan $\delta$ bei 70°C einer Gummizusammensetzung des Kronenteils (9A; Cr) (70°C tan $\delta_{Cr}$) größer ist als ein tan $\delta$ bei 70°C einer Gummizusammensetzung des Schulterteils (9B; Sh) (70°C tan $\delta_{Sh}$), wobei der "70°C tan $\delta$" ein Verlusttangens ist, der bei einer Temperatur von 70°C, einer Frequenz von 10 Hz, einer anfänglichen Dehnung von 10%, einer dynamischen Dehnung von 1% und einem Dehnungsmodus gemessen wird,
   wobei ein tan $\delta$ bei 0°C der Gummizusammensetzung des Kronenteils (9A; Cr) (0°C tan $\delta_{Cr}$) kleiner ist als ein tan $\delta$ bei 0°C der Gummizusammensetzung des Schulterteils (9B; Sh) (0°C tan $\delta_{Sh}$), wobei der "0°C tan $\delta$" ein Verlusttangens ist, der bei einer Temperatur von 0°C, einer Frequenz von 10 Hz, einer anfänglichen Dehnung von 10%, einer dynamischen Dehnung von 2,5% und einem Dehnungsmodus gemessen wird,
   wobei eine Laufflächenoberfläche (2A) des Laufflächenteils (2) eine Rille umfasst, und
   wobei die Rille eine Grenze zwischen dem Schulterteil (9A; Cr) und dem Schulterteil (9B; Sh) überspannt und einen Äquator (C) nicht überspannt.

2. Reifen (1) für ein automatisiertes Zweiradfahrzeug nach Anspruch 1, wobei eine größte Rillentiefe D (mm) der Rille die folgende Ungleichung (1) erfüllt:

$$\text{Ungleichung (1): } D \times 70°C \tan \delta_{Cr} > 1,20$$

3. Reifen (1) für ein automatisiertes Zweiradfahrzeug nach Anspruch 1 oder 2, wobei die größte Rillenbreite W (mm) der Rille die folgende Ungleichung (2) erfüllt:

$$\text{Ungleichung (2): } W \times 70°C \tan \delta_{Cr} > 0,80$$

4. Reifen (1) für ein automatisiertes Zweiradfahrzeug nach einem der Ansprüche 1 bis 3, wobei eine größte Rillenumfangslängenkomponente $L_C$ (mm) die folgende Ungleichung (3) erfüllt:

$$\text{Ungleichung (3): } L_C \times (70°C \tan \delta_{Cr} - 70°C \tan \delta_{Sh}) > 0,05$$

5. Reifen (1) für ein automatisiertes Zweiradfahrzeug nach einem der Ansprüche 1 bis 4, wobei eine kleinste Rillenbodendicke H (mm) der Rille die folgende Ungleichung (4) erfüllt:

$$\text{Ungleichung (4): } H/0°C \tan \delta_{Cr} > 1,3$$

6. Reifen (1) für ein automatisiertes Zweiradfahrzeug nach einem der Ansprüche 1 bis 5, wobei eine größte Rillenquerschnittsfläche S ($mm^2$) der Rille die folgende Ungleichung (5) erfüllt:

## Ungleichung (5): S/(0°C tan $\delta_{Sh}$ - 0°C tan $\delta_{Cr}$) < 150

**7.** Reifen (1) für ein automatisiertes Zweiradfahrzeug nach einem der Ansprüche 1 bis 6, wobei eine tan $\delta$-Peaktemperatur der Gummizusammensetzung des Schulterteils (9A; Cr) (TCr) niedriger ist als eine tan $\delta$-Peaktemperatur der Gummizusammensetzung des Schulterteils (9B; Sh) ($T_{Sh}$), wobei die "tan $\delta$-Peaktemperatur der Gummizusammensetzung" als eine Temperatur bestimmt wird, die einem größten tan $\delta$-Wert in einer Temperaturverteilungskurve von tan $\delta$ entspricht, die durch Messung bei einer Frequenz von 10 Hz, einer anfänglichen Dehnung von 10%, einer dynamischen Dehnung von $\pm$ 0. 5% und einer Temperaturanstiegsrate von 2°C/min erhalten wird.

**8.** Reifen (1) für ein automatisiertes Zweiradfahrzeug nach einem der Ansprüche 1 bis 7, wobei eine Härte der Gummizusammensetzung des Kronenteils (9A; Cr) höher ist als eine Härte der Gummizusammensetzung des Schulterteils (9B; Sh), wobei die Härte mit einem Typ-A-Durometer bei 23°C gemäß JIS K 6253 bestimmt wird.

**9.** Reifen (1) für ein automatisiertes Zweiradfahrzeug nach einem der Ansprüche 1 bis 8, wobei eine Spannung bei 300% Dehnung der Gummizusammensetzung des Kronenteils (9A; Cr) ($M300_{Cr}$) höher ist als eine Spannung bei 300% Dehnung der Gummizusammensetzung des Schulterteils (9B; Sh) ($M300_{Sh}$), wobei eine Spannung bei 300% Dehnung (M300) [MPa] gemäß JIS K 6251 bei einer Zuggeschwindigkeit von 3,3 mm/sec bei 23°C bestimmt wird.

**Revendications**

**1.** Pneu (1) pour un véhicule automatisé à deux roues, le pneu comprenant une partie de bande de roulement (2), la partie de bande de roulement (2) comprenant une partie de sommet (9A ; Cr) située au centre dans une direction axiale du pneu et une paire de parties d'épaulement (9B ; Sh) situées à l'extérieur de la partie de sommet (9A ; Cr),

dans lequel une tan $\delta$ à 70°C d'une composition de caoutchouc de la partie de sommet (9A ; Cr) (70°C tan $\delta_{Cr}$) est plus grande qu'une tan $\delta$ à 70°C d'une composition de caoutchouc de la partie d'épaulement (9B ; Sh) (70°C tan $\delta_{Sh}$), dans lequel la "70°C tan $\delta$" est une tangente de perte mesurée à une température de 70°C, une fréquence de 10 Hz, un allongement initial de 10 %, un allongement dynamique de 1 % et un mode d'extension, dans lequel une tan $\delta$ à 0°C de la composition de caoutchouc de la partie de sommet (9A ; Cr) (0°C tan $\delta_{Cr}$) est plus petite qu'une tan $\delta$ à 0°C de la composition de caoutchouc de la partie d'épaulement (9B ; Sh) (0°C tan $\delta_{Sh}$), dans lequel la "0°C tan $\delta$" est une tangente de perte mesurée à une température de 0°C, une fréquence de 10 Hz, un allongement initial de 10 %, un allongement dynamique de 2,5 % et un mode d'extension, dans lequel une surface de bande de roulement (2A) de la partie de bande de roulement (2) comprend une rainure, et dans lequel la rainure chevauche une limite entre la partie de sommet (9A ; Cr) et la partie d'épaulement (9B ; Sh) et ne chevauche pas un équateur (C).

**2.** Pneu (1) pour un véhicule automatisé à deux roues selon la revendication 1, dans lequel une plus grande profondeur de rainure D (mm) de la rainure satisfait à l'inégalité suivante (1) :

## Inégalité (1) : D × 70°C tan $\delta_{Cr}$ > 1,20

**3.** Pneu (1) pour un véhicule automatisé à deux roues selon la revendication 1 ou 2, dans lequel une plus grande largeur de rainure W (mm) de la rainure satisfait à l'inégalité suivante (2) :

## Inégalité (2) : W × 70°C tan $\delta_{Cr}$ > 0,80

**4.** Pneu (1) pour un véhicule automatisé à deux roues selon l'une quelconque des revendications 1 à 3, dans lequel une plus grande composante de longueur circonférentielle de rainure $L_C$ (mm) satisfait à l'inégalité suivante (3) :

## Inégalité (3) : $L_C$ × (70°C tan $\delta_{Cr}$ - 70°C tan $\delta_{Sh}$) > 0,05

**5.** Pneu (1) pour un véhicule automatisé à deux roues selon l'une quelconque des revendications 1 à 4, dans lequel une plus petite épaisseur du fond de rainure H (mm) de la rainure satisfait à l'inégalité suivante (4) :

$$\text{Inégalité (4) : } H/0°C \tan \delta_{Cr} > 1{,}3$$

6. Pneu (1) pour un véhicule automatisé à deux roues selon l'une quelconque des revendications 1 à 5, dans lequel une plus grande surface de section transversale de rainure 5 (mm$^2$) de la rainure satisfait à l'inégalité suivante (5) :

$$\text{Inégalité (5) : } S/(0°C \tan \delta_{Sh} - 0°C \tan \delta_{Cr}) < 150$$

7. Pneu (1) pour un véhicule automatisé à deux roues selon l'une quelconque des revendications 1 à 6, dans lequel une température de pointe tan $\delta$ de la composition de caoutchouc de la partie de sommet (9A ; Cr) ($T_{Cr}$) est inférieure à une température de pointe tan $\delta$ de la composition de caoutchouc de la partie d'épaulement (9B ; Sh) ($T_{Sh}$), la "température de pointe tan $\delta$ de la composition de caoutchouc" étant déterminée comme une température correspondant à une valeur tan $\delta$ la plus grande dans une courbe de distribution de température de tan $\delta$ obtenue en mesurant à une fréquence de 10 Hz, un allongement initial de 10%, un allongement dynamique de $\pm$ 0,5% et un taux d'augmentation de la température de 2°C/min.

8. Pneu (1) pour un véhicule automatisé à deux roues selon l'une quelconque des revendications 1 à 7, dans lequel une dureté de la composition de caoutchouc de la partie sommet (9A ; Cr) est supérieure à une dureté de la composition de caoutchouc de la partie d'épaulement (9B ; Sh), la dureté étant déterminée avec un duromètre de type A à 23°C conformément à la norme JIS K 6253.

9. Pneu (1) pour un véhicule automatisé à deux roues selon l'une quelconque des revendications 1 à 8, dans lequel une contrainte à 300% d'allongement de la composition de caoutchouc de la partie de sommet (9A ; Cr) ($M300_{Cr}$) est supérieure à une contrainte à 300% d'allongement de la composition de caoutchouc de la partie d'épaulement (9B ; Sh) ($M300_{Sh}$), une contrainte à 300% d'allongement (M300) [MPa] étant déterminée conformément à la norme JIS K 6251, à une vitesse de traction de 3,3 mm/sec à 23°C.

# FIG. 1

# FIG. 2

# FIG.3

EP 4 119 361 B1

# FIG.4

30

# FIG. 5

TW

Sh    Cr    Sh

1

C

2e    2e

2

2A

Lc

R

W

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019127184 A
- JP S6094804 A
- CN 101500824 A
- JP 2018070109 A
- JP 5457233 B

**Non-patent literature cited in the description**

- **K. L. HOY.** Table of Solubility Parameters. Solvent and Coatings Materials Research and Development Department, Union Carbites Corp, 1985